# EUROPEAN PATENT SPECIFICATION

(11) **EP 3 910 552 B1**
(45) Date of publication and mention of the grant of the patent: **18.11.2026**
(21) Application number: 20174435.6
(22) Date of filing: 13.05.2020
(51) Int. Cl.: G06V 10/82, G06V 10/80, G06V 10/44

(54) **OBJECT CLASSIFICATION WITH CONTENT AND LOCATION SENSITIVE CLASSIFIERS**
OBJEKTKLASSIFIZIERUNG MIT INHALTS- UND STANDORTSENSITIVEN KLASSIFIKATOREN
CLASSIFICATION D'OBJETS AVEC DU CONTENU ET CLASSIFICATEURS SENSIBLES À LA LOCALISATION

(43) Date of publication of application: 17.11.2021
(73) Proprietor: Robert Bosch GmbH, 70442 Stuttgart (DE)
(72) Inventor: Fischer, Volker, 71229 Leonberg (DE); Rambach, Kilian, 70567 Stuttgart (DE); Mummadi, Chaithanya Kumar, 71296 Heimsheim (DE); Khoreva, Anna, 70197 Stuttgart (DE); Sakmann, Kaspar, 1020 Wien (AT); Saranrittichai, Piyapat, 70825 Korntal-Muenchingen (DE)

(56) References cited:
- FELZENSZWALB P F ET AL: "Object Detection with Discriminatively Trained Part-Based Models", IEEE TRANSACTIONS ON PATTERN ANALYSIS AND MACHINE INTELLIGENCE, IEEE COMPUTER SOCIETY, USA, vol. 32, no. 9, 1 September 2010 (2010-09-01), pages 1627 - 1645, XP011327422, ISSN: 0162-8828, DOI: 10.1109/TPAMI.2009.167
- ZHUN ZHONG ET AL: "Random Erasing Data Augmentation", ARXIV.ORG, CORNELL UNIVERSITY LIBRARY, 201 OLIN LIBRARY CORNELL UNIVERSITY ITHACA, NY 14853, 16 August 2017 (2017-08-16), XP081404027
- YUE FAN: "SPATIAL INFORMATION IS OVERRATED FOR IMAGE CLASSIFICATION", 25 September 2019 (2019-09-25), XP055738971, Retrieved from the Internet <URL:https://openreview.net/attachment?id=H1l7AkrFPS&name=original_pdf> [retrieved on 20201012]
- JUNLIANG LI ET AL: "Multiple Object Detection by a Deformable Part-Based Model and an R-CNN", IEEE SIGNAL PROCESSING LETTERS., vol. 25, no. 2, 1 February 2018 (2018-02-01), US, pages 288 - 292, XP055738984, ISSN: 1070-9908, DOI: 10.1109/LSP.2017.2789325
- SEBASTIEN C WONG ET AL: "Understanding data augmentation for classification: when to warp?", 28 September 2016 (2016-09-28), XP055555467, Retrieved from the Internet <URL:https://ieeexplore.ieee.org/ielx7/7794373/7796973/07797091.pdf?tp=&arnumber=7797091&isnumber=7796973> DOI: 10.1109/DICTA.2016.7797091

## Description

### FIELD OF THE INVENTION

The invention relates to a system and computer-implemented method for training a machine learnable model for classification of objects in spatial data, such as image data. The invention further relates to a system and computer-implemented method for classifying objects in spatial data using a machine learned model. The invention further relates to a computer-readable medium comprising data representing instructions for a processor system to perform either or both computer-implemented methods.

### BACKGROUND OF THE INVENTION

Object classification is a key-enabler in various technical application areas, such as autonomous driving in which object classification may be used to detect and recognize objects in sensor data acquired by one or more sensors integrated into a vehicle. Such classification may also be referred to 'recognition' since the classification involves recognizing a class of object. For example, other road users (cars, pedestrians, etc.) or traffic signs may be recognized in image data acquired by a camera sensor. In some cases, the output of the object classification may be used to control actuators, such as actuators involved in the steering and/or braking of the vehicle, e.g., to autonomously avoid collisions with other road users. There are various other uses for object classification, for example in robotics where it may enable a robot to recognize objects in its environment and act accordingly, but also for enabling character recognition, pose recognition, image search, etc.

In general, objects may be classified in image data, e.g., as acquired by a camera, but also in other types of spatial data acquired by other types of sensors. A specific example is the classification of cars and pedestrians in LiDAR data. In general, the spatial data may be two-dimensional, three-dimensional or even higher-dimensional spatial data.

It is known to use machine learning techniques for object classification. This typically involves training a machine learnable model, e.g., a neural network, with a large set of training data which resembles the type of sensor data to which the machine learnable model is to be applied. So-called deep neural networks (DNNs) represent the current state of the art in image classification [1] - [4]. They learn image classification by learning to extract discriminative features of an image which are highly optimized for the classification task given the training data at hand. However, these feature extractors are known for their inability to disentangle per se independent factors which may jointly define an object class. Rather, they often take a 'shortcut' by focusing only on individual characteristics which do not uniquely define the object class. This may for example result in a trained DNN recognizing an object by texture but not by shape. Another example is that a trained DNN may focus only on content information, such as texture, colors, edges, while ignoring location information, such as absolute and/or relative locations of parts of the object.

This may lead to trained DNNs generating highly confident yet erroneous predictions on instances of spatial data where so-called biased factors (e.g., the aforementioned content information) are absent or in which mainly those factors are present (e.g., the aforementioned location information) which the DNN has effectively learned to ignore. This may in particular occur if a trained DNN is applied to instances of spatial data which lie outside of the distribution of the training data, e.g., represent previously unseen outliers. However, such outliers may be unavoidable in many real-world applications.

It is known to greatly increase the amount of training data such that more possible instances of an object in spatial data are encountered during training, thereby reducing the chance of encountering outliers after deployment of the trained DNN. However, there are limits to such increases in training data, both practical but also inherently since in many real-world applications, there will remain a possibility of encountering outliers.

XP011327422 (Felzenszwalb et al., 2010): This paper introduces Deformable Part Models (DPM) - a part-based object detection framework. Objects are modeled as a root filter plus movable parts with learned spatial relationships, trained discriminatively with latent SVMs on HOG features. It was state-of-the-art on PASCAL VOC before deep learning dominated.

XP081404027 (Zhong et al., 2017): This paper proposes Random Erasing, a simple data augmentation technique. During training, random rectangular regions of an image are erased (filled with random or mean values) to improve model robustness to occlusions and reduce overfitting. It is widely used in object detection, person re-identification, and image classification tasks.

### References

[1] *"*EfficientNet: Rethinking Model Scaling for Convolutional Neural Networks", Mingxing Tan et al., https://arxiv.org/abs/1905.11946
[2] *"*Identity Mappings in Deep Residual Networks", Kaiming He et al., https://arxiv.org/abs/1603.05027
[3] *"*Billion-scale semi-supervised learning for image classification", I. Zeki Yalniz et al., https://arxiv.org/abs/1905.00546
[4] *"*Drop an Octave: Reducing Spatial Redundancy in Convolutional Neural Networks with Octave Convolution", Yunpeng Chen et al., https://arxiv.orq/abs/1904.05049

### SUMMARY OF THE INVENTION

It would be desirable to be able to train a machine learnable model, and to use a machine learned model, for classification of objects in spatial data, which is more robust against outliers and which may be trained without excessive amounts of training data.

In accordance with a first aspect of the invention, a computer-implemented method and corresponding system are provided, as defined by claim 1 and 11, for training a machine learnable model for classification of objects in spatial data. In accordance with a further aspect of the invention, a computer-implemented method and corresponding system are provided, as defined by claims 8 and 12, for using the machine learned model for classification of objects in spatial data. In accordance with a further aspect of the invention, as defined by claim 10, a computer-readable medium is provided comprising instructions for causing a processor system to perform a method of any one of claims 1 to 9.

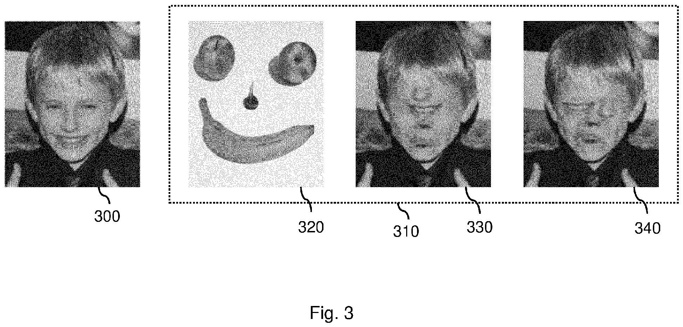

The above measures are based on the insight that there may be two fundamental factors defining an object class in spatial data, namely the presence of parts composing the object and their spatial arrangement. The presence of parts composing the object may be understood as a 'content' factor and be represented in the spatial data itself by the presence of certain texture, colors, edges, etc. The spatial arrangement of the parts may be referred to as a 'location' factor and may be represented in the spatial data by the parts of the object having a certain relative spatial arrangement, and in some cases the parts having certain absolute spatial positions. The inventors have recognized that it may be problematic if the machine learnable model focuses only on one of the two factors, e.g., only on the content or only on the location, or if one factor greatly outweighs the other in the decision-making of the machine learned model. Namely, this may make the machine learned model susceptible to outliers in which only one of the two factors is present in the spatial data, or in which one of the two factors has a characteristic which matches an object in the training data ('inlier') whereas the other factor has an entirely different characteristic (other 'inlier' class, or 'outlier'), as will also be illustrated elsewhere with reference to Fig. 3.

This may result in the machine learned model providing highly confident but erroneous classifications of objects, which may be highly problematic in real-life applications. For example, an autonomous driving system may recognize a yield sign in a triangular building feature, which may cause the vehicle to inadvertently slow down or suddenly brake.

The above measures address these problems by providing two separate classification parts: one which is focused on classifying objects based on content information and one which is focused on classifying objects based on location information. For that purpose, two separate classification parts may be provided in the machine learnable model, which may then be trained specifically on content information or on location information.

More specifically, the machine learnable model may comprise a convolutional part which may generate one or more feature maps from an instance of spatial data. Such convolutional parts are known per se, and may comprise one or more convolutional layers but also other types of layers, such as pooling layers. The one or more feature maps may represent an 'activation' of the convolutional part, which may, like the spatial data from which they were generated, themselves contain content information and location information. For example, the feature maps may have spatial dimensions which may represent the spatial dimensions of the spatial data, while activations in a feature map at a particular location may represent an occurrence of a feature (e.g., particular content) at the particular location.

The content classification part may be trained on a version of the one or more feature maps from which location information was removed. This version may also be referred to as a content information-specific feature map and may omit, or at least greatly reduce in terms of significance, any location information. The content classification part may thus be trained to be sensitive to content information and invariant to location information, and may elsewhere also be referred to as 'content sensitive classifier' (**CSC**). Likewise, the location classification part may be trained on a version of the one or more feature maps from which content information was removed. This version may also be referred to as a location information-specific feature map and may omit, or at least greatly reduce in terms of significance, any content information. The location classification part may thus be trained to be sensitive to location information and invariant to content information, and may also be referred to as a 'location sensitive classifier' (**LSC**). Such separation of the classification based on both factors may avoid the overall classifier being inadvertently biased on only one of the two factors and providing highly confident predictions, e.g., indicating the presence of one object class, even if the other factor is missing or indicates a different object class.

Nevertheless, the separation of the classification based on both factors may not fully diminish the susceptibility of the machine learned model to outliers. Therefore, as part of the machine learnable model, an outlier detection part may be provided which may be trained during the training to detect outliers. However, to avoid having to provide explicit outliers in the training data, and thereby having to increase the size of the training data, the outlier detection part may be trained on inlier examples while the presence of actual outliers in the input data of the machine learnable model may be mimicked during training. For that purpose, one or more of the previously generated feature maps, e.g., as generated by the convolutional part or as generated for the content classification part or the location classification part, may be modified so as to mimic the presence of outliers. Thereby, it may not be necessary to modify the spatial data itself, in which it may be difficult to create realistic outliers, but rather such outliers may be generated in the feature maps during training; namely, it may be easier to generate spatial outliers in the machine learnable model itself by feature manipulation compared to modifying actual input data.

Effectively, the machine learnable model may provide a content sensitive classifier, a location sensitive classifier and at least one outlier detector. The combination of these three parts may provide a more robust classification of objects in spatial data with respect to outliers, without having to increase the size of the training data. Namely, the object classification may now be separately with respect to content and location, which may allow a more informed decision to be taken on the object classification. Namely, if the content classification part indicates the presence of an object in class A while the location classification part indicates the presence of an object in class B, it may be decided that the actual object may represent an outlier with respect to the training data and thus that overall classification may be unreliable. Previous image classification may simply indicate the presence of class A if the classifier was inadvertently biased on content information or the presence of class B if the classifier was biased on location information. The separate classification based on content and location may thereby contribute to the explainability and interpretability of the classification, which may be of increasing importance as machine learnable models grow more complex and are used in more safety-conscious applications.

More generally speaking, both classifiers may jointly distinguish between objects in spatial data being in-distribution or marginal-out-of-distribution. Namely, in the former case, the classification output of both classifiers may be in agreement, while in the latter case, the classification output of both classifiers may be in disagreement.

To be able to even better detect and distinguish outliers, e.g., to detect and distinguish more types of outliers and/or detect outliers with greater certainty, the outlier detector may explicitly indicate whether an outlier is present or not. As such, a decision on a classification in an object class may be taken only if both classification parts classify the input instance into a same class while the outlier detector indicates that the input instance does *not* represent an outlier. Thereby, classification of objects may be made dependent on an agreement between the individual classifiers and the at least one outlier detector. If such agreement is not reached, a potential object may not be classified, which may in some cases involve the potential object being simple ignored, or the object may be classified as an unknown object or another type of action may be taken. This may provide a machine learned model for image classification which may allow explainable and interpretable decision-making. The respective outputs of the classifiers and outlier detector(s) may together provide such explanations, as will also be elucidated with reference to various tables in the detailed description of this specification.

The above measures may thus empower a classification network to learn the feature representation to be specifically sensitive towards the content and location factors, enabling the network to detect an out-of-distribution sample and provide an explanation of its nature. Hence, outliers sharing common content and location factors with in-distribution samples can still be identified, even if the factors are blended from different classes. Crucially, the investigation network may be trained only on in-distribution samples yet provide explicit cues for interpretable decision-making on previously unseen outliers.

Optionally, the machine learnable model comprises a location-and-content outlier detection part, and the method comprises generating the pseudo outlier feature map for the location-and-content outlier detection part by modifying feature information which is contained in the one or more previously generated feature maps and which is associated with both the location information and the content information. As one of the outlier detectors, or as the only outlier detector, the machine learnable model may comprise a location-and-content outlier detection part, which may in the following also be referred to as an outlier detection for joint marginal distribution ('**ODJ**'), referring to this outlier detector being trained to detect samples which are inliers in both the location marginal distribution of the training data and the content marginal distribution of the training data, but of which the association between the marginal distributions is inaccurate in that the association between spatial and content features is incorrect. In other words, this outlier detector may detect samples which are outliers with respect to the joint marginal distribution of location and content of the classes which were present in the training data. For that purpose, a pseudo outlier feature map may be generated by modifying the feature information of one or more previously generated feature maps which contain location information and content information. For example, the one or more feature maps generated by the convolutional part may be modified to mimic the presence of actual outliers in the input data of the machine learnable model. The outline detector may be trained on the thus-generated pseudo outlier feature map(s) to classify the objects represented by the generated pseudo outlier feature map(s) as outliers.

Optionally, the machine learnable model comprises a location outlier detection part, and the method comprises generating the pseudo outlier feature map for the location outlier detection part by modifying feature information which is contained in the one or more previously generated feature maps and which is associated with the location information. As one of the outlier detectors, or as the only outlier detector, the machine learnable model may comprise a location outlier detection part, which may in the following also be referred to as an outlier detection for location marginal (**'ODL'**), referring to the outlier detector being trained to detect samples which are outliers in the location marginal distribution of the training data. For that purpose, a pseudo outlier feature map may be generated by modifying the feature information of one or more previously generated feature maps which contain location information. In some examples, feature map(s) may be modified which contain predominately or only location information. For example, the location information-specific feature map for the location sensitive classifier may be modified to mimic the presence of actual outliers in the input data of the machine learnable model.

Optionally, the location outlier detection part is implemented by the location classification part by providing the pseudo outlier feature map to the location classification part as part of a separate outlier object class to be learned. Instead of implementing the outline detector for location marginal as a separate detector, e.g., as a separate head of a deep neural network, this detector may also be implemented by the location sensitive classifier itself, namely by having the location sensitive classifier learn to classify outliers from the pseudo outlier feature map and to categorize such outliers as a separate class, e.g., a class N+1 for a machine learnable model configured to classify N object classes.

Optionally, the machine learnable model comprises a content outlier detection part, and the method comprises generating the pseudo outlier feature map for the content outlier detection part by modifying feature information which is contained in the one or more previously generated feature maps and which is associated with the content information. As one of the outlier detectors, or as the only outlier detector, the machine learnable model may comprise a content outlier detection part, which may in the following also be referred to as an outlier detection for content marginal (**'ODC'**), referring to the outlier detector being trained to detect samples which are outliers in the content marginal distribution of the training data. For that purpose, a pseudo outlier feature map may be generated by modifying the feature information of one or more previously generated feature maps which contain content information. In some examples, one or more feature maps from the convolutional part may be modified, after which location information may be removed from the modified feature map(s), e.g., by spatial aggregation, to obtain a pseudo outlier feature map which omits location information and which contains predominately or only content information.

Optionally, each one of the one or more feature maps generated by the convolutional part each has at least two spatial dimensions associated with the location information and wherein feature values of the one or more feature maps at each spatial coordinate together form a feature vector representing content information at the respective spatial coordinate, wherein:
- removing the location information from the one of the one or more feature maps comprises aggregating the one or more feature maps over the spatial dimensions to form a content information-specific feature map comprising one feature vector;
- removing the content information from the one of the one or more feature maps comprises aggregating the feature values per spatial coordinate over the one or more feature maps to form a location information-specific feature map having at least two spatial dimension and one feature value channel.

The above represent advantageous ways of generating the content information-specific feature map and the location information-specific feature map. In a specific example, if the convolutional part generates an output activation of size HxWxC, with H and W referring to the height and width and thereby to the spatial dimensions and C referring to a number of channels each representing a separate feature (and thereby the output activation corresponding to C feature maps of each HxWx1), the content-specific feature map may be generated by aggregation as a 1x1xC feature map, while the location-specific feature map may be generated by aggregation as a HxWx1 feature map.

Optionally, modifying the one or more previously generated feature maps comprises at least one of:
- removing feature information from said feature maps;
- pseudo-randomly shuffling locations of feature information in said feature maps;
- mixing feature information between feature maps of different object classes;
- swapping feature information at different locations in said feature maps.

The above represent advantageous ways of generating pseudo outlier feature maps from feature maps generated for classifiers of the machine learnable model.

Optionally, the machine learnable model is a deep neural network, wherein the convolutional part is a convolutional part of the deep neural network and wherein the content classification part and the location classification part are respective classification heads of the deep neural network. In some embodiments, the respective classifiers may be implemented as different heads of a deep neural network. In some embodiments, at least some of the outlier detectors may also be implemented as respective heads of the deep neural network. In other embodiments, individual classifiers and/or outlier detectors may be implemented as separate neural networks which may be jointly trained on the training data. In this respect, it is noted that the advantageous effects of using a content-sensitive classifier, a location-sensitive classifier and at least one outlier detector may also be obtained by other machine learnable models besides deep neural networks. For example, instead of using deep neural networks for classification and/or outlier detection, the machine learnable model may be based on Bayesian networks, Hidden Markov models, etc.

Optionally, the input interface of the system configured to classify objects in spatial data is a sensor interface to a sensor, wherein the sensor is configured to acquire the spatial data. The system may thus classify objects in sensor data, e.g., in real-time or pseudo real-time. For example, the sensor data in which objects are to be classified may be obtained from an image sensor, a lidar sensor, etc., or from a combination of such sensors.

Optionally, the system is a control system configured to adjust a control parameter based on said classification of the object. For example, the control parameter may be linked to an actuator, and changing the control parameter may change the operation of the actuator. Thereby, the control system may directly or indirectly control the actuator based on the classification results. For example, in an (semi-)autonomous vehicle, the control system may control the breaking and/or steering to avoid a detected pedestrian.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a schematic representation of a system for training a machine learnable model for classification of objects in spatial data;
Fig. 2 shows a schematic representation of a method for training a machine learnable model for classification of objects in spatial data;
Fig. 3 illustrates a relation between content information and location information in spatial data and the classification of objects in the spatial data;
Fig. 4 illustrates the joint space of the location (x-axis) and content (y-axis) factor in the classification of objects in spatial data, with the marginals for both factors being indicated at the respective axis;
Fig. 5 shows a schematic representation of an exemplary classification framework in which an input instance is mapped onto the two factor-sensitive classification branches and three outlier branches, and in which information of a factor is removed in select branches to generate an invariance in this branch with respect to this factor;
Fig. 6 shows examples of pseudo outliers generated in the three outlier branches of the Fig. 5 example, in which the tokens a, b, c, d indicate locations in an intermediate network state that encodes information about an element and wherein the pseudo outliers are obtained by perturbing locations in four different ways;
Fig. 7 shows a schematic representation of a system for classifying objects in spatial data using a machine learned model;
Fig. 8 shows a schematic representation of a method for classifying objects in spatial data using a machine learned model;
Fig. 9 shows the system as part of an (semi-)autonomous vehicle; and
Fig. 10 shows a computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 20: sensor
- 22: camera
- 40: actuator
- 42: electric motor
- 60: physical environment
- 80: (semi-)autonomous vehicle

- 100: system for training machine learnable model
- 160: processor subsystem
- 180: data storage interface
- 190: data storage
- 192: training data
- 194: data representation of machine learnable model
- 196: data representation of machine learned model

- 200: method of training machine learnable model
- 210: accessing training data for training
- 220: providing machine learnable model
- 225: providing outlier detection part
- 230: training the machine learnable model
- 240: generating content information-specific feature map
- 245: training content classification part
- 250: generating location information-specific feature map
- 255: training location classification part
- 260: generating pseudo outlier feature map
- 265: training outlier detection part

- 212: accessing input data for inference
- 220: training machine learnable model
- 222: using machine learned model for inference
- 230: providing state memory
- 240: extracting previous internal state information
- 250: updating state memory with current internal state

- 300: object (person) classifiable by content and location information
- 310: violations of content and location information
- 320: fruits in facial arrangement of person
- 330: elements of face with locations permuted
- 340: randomly shuffled facial elements

- 400: location (spatial arrangement) marginal
- 410: content marginal
- 420: in-distribution sample
- 430: joint-out-of-distribution sample
- 440: marginal-out-of-distribution sample
- 450: full-out-of-distribution sample

- 500: input instance
- 510: location sensitive classifier
- 512: feature aggregation
- 514: HxWx1 feature map
- 516: N+1 class classification
- 520: content sensitive classifier
- 522: spatial aggregation
- 524: 1x1xC feature map
- 526: N-class classification
- 528: outlier detection for content marginal distribution
- 530: location-and-content outlier detection part
- 532: flatten
- 534: HxWxC feature map
- 536: outlier detection for joint marginal distribution
- 540: intermediate feature maps
- 600: intermediate feature maps of inliers
- 610: class A
- 620: class B
- 650: intermediate feature maps of pseudo outliers
- 660: feature map generated by removal of information
- 670: feature map generated by random location shuffle
- 680: feature map generated by content-mixing between classes
- 690: feature map generated by location swapping

- 700: system for control or monitoring using machine learned model
- 720: sensor data interface
- 722: sensor data
- 740: actuator interface
- 742: control data
- 760: processor subsystem
- 780: data storage interface
- 790: data storage

- 800: method for classifying objects in spatial data
- 810: accessing machine learned model
- 820: accessing input data
- 830: generating feature map(s)
- 840: generating content information-specific feature map
- 850: generating location information-specific feature map
- 860: generating content-based object classification result
- 870: generating location-based object classification result
- 880: generating outlier detection result
- 890: classifying object in spatial data

- 900: computer-readable medium
- 910: non-transitory data

### DETAILED DESCRIPTION OF EMBODIMENTS

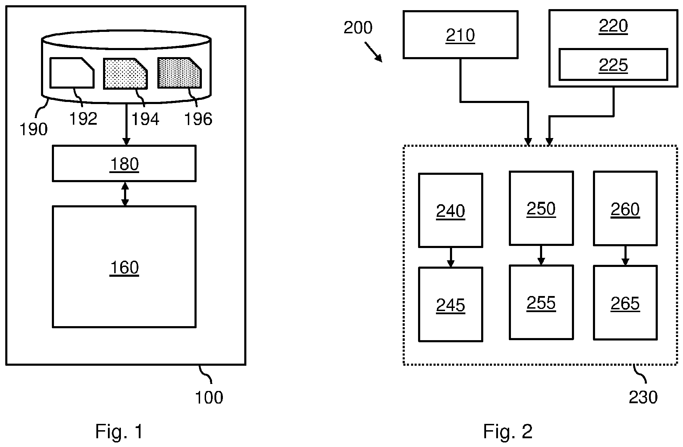

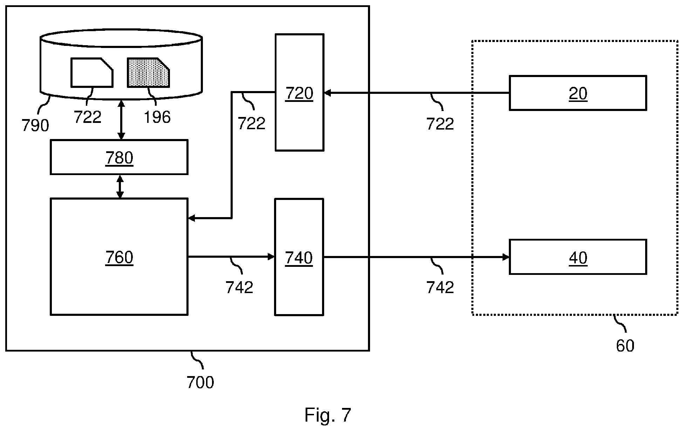

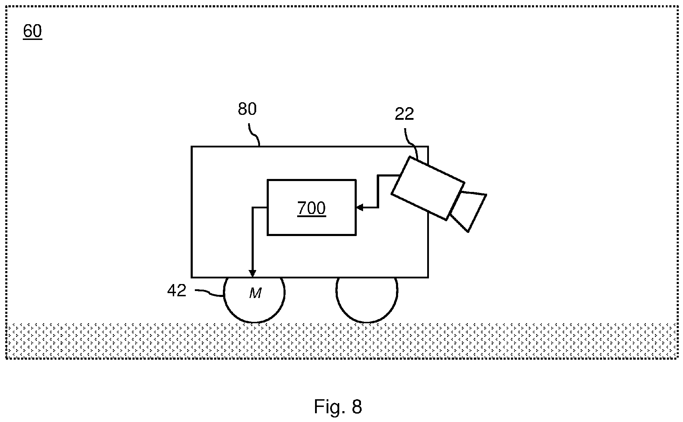

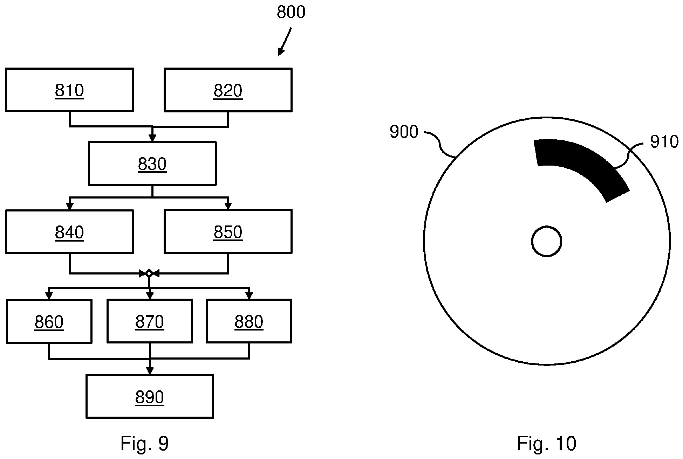

The following provides with reference to Figs. 1 and 2 a schematic overview of a system and method for training a machine learnable model for classification of objects in spatial data, and with reference to Figs. 7 and 9 a schematic overview of a system and method for classifying objects in spatial data using the resulting machine learned model. The machine learnable/learned model and its training and use are further explained with reference to Figs. 3 to 6, while Fig. 8 relates to the use of the machine learned model for control or monitoring of a physical system, being in this example an (semi-)autonomous vehicle. Fig. 10 relates to a computer-readable medium comprising a computer program.

**Fig. 1** shows a system 100 for training a machine learnable model for classification of objects in spatial data. Given such spatial data, the objects may be classifiable into different object classes, e.g., by a human, by combining content information and location information contained in the spatial data. The system 100 may comprise an input interface for accessing training data 192 for the machine learnable model. The training data 192 may comprise instances of spatial data, with the instances of the spatial data comprising objects belonging to different object classes. For example, the spatial data may be image data, and each instance may be an image which may comprise one or more objects. In a specific example, the images may be of a road, and the objects contained in the images may be cars, pedestrians, bicyclist, road signs, obstacles, the road itself, etc.

As shown in Fig. 1, the input interface may be constituted by a data storage interface 180 which may access the training data 192 from a data storage 190. For example, the data storage interface 180 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 190 may be an internal data storage of the system 100, such as a hard drive or SSD, but also an external data storage, e.g., a network-accessible data storage.

In some embodiments, the data storage 190 may further comprise a data representation 194 of an untrained version of the machine learnable model which may be accessed by the system 100 from the data storage 190. It will be appreciated, however, that the training data 192 and the data representation 194 of the machine learnable model may also each be accessed from a different data storage, e.g., via a different subsystem of the data storage interface 180. Each subsystem may be of a type as is described above for the data storage interface 180. In other embodiments, the data representation 194 of the untrained version of the machine learnable model may be internally generated by the system 100, for example on the basis of design and/or architectural parameters for the machine learnable model, and therefore may not be explicitly stored in the data storage 190.

The system 100 may further comprise a processor subsystem 160 which may be configured to, during operation of the system 100 and as part of the training of the machine learnable model, generate a content information-specific feature map by removing location information from the one or more feature maps and training the content classification part on the content information-specific feature map; generate a location information-specific feature map by removing content information from the one or more feature maps and training the location classification part on the location information-specific feature map; provide, as part of the machine learnable model, a least one outlier detection part for detecting outliers in input data of the machine learnable model which do not fit a distribution of the training data; and as part of the training of the machine learnable model, generate a pseudo outlier feature map by modifying one or more previously generated feature maps which are generated for the instance of the spatial data, to mimic a presence of an actual outlier in the input data of the machine learnable model, and train the outlier detection part on the pseudo outlier feature map. It will be appreciated that these aspects of the operation of the system 100 will be further explained with reference to Figs. 3-6.

The system 100 may further comprise an output interface for outputting a data representation 196 of the trained machine learnable model, this model also being referred to as a machine 'learned' model and its data also being referred to as trained model data 196. For example, as also illustrated in Fig. 1, the output interface may be constituted by the data storage interface 180, with said interface being in these embodiments an input/output ('IO') interface, via which the trained model data 196 may be stored in the data storage 190. For example, the data representation 194 defining the 'untrained' model may during or after the training be replaced, at least in part, by the data representation 196 of the trained model, in that the parameters of the model, such as weights, hyperparameters and other types of parameters of the model, may be adapted to reflect the training on the training data 192. In other embodiments, as also shown in Fig. 1, the data representation 196 may be stored separately from the data representation 194 defining the 'untrained' model. In some embodiments, the output interface may be separate from the data storage interface 180, but may in general be of a type as described above for the data storage interface 180.

**Fig. 2** shows a computer-implemented method 200 for training a machine learnable model for classification of objects in spatial data. The method 200 may correspond to an operation of the system 100 of Fig. 1, but does not need to, in that it may also correspond to an operation of another type of system, apparatus or device or in that it may correspond to a computer program. The method 200 is shown to comprise, in a step titled "ACCESSING TRAINING DATA FOR TRAINING", accessing 210 training data, and in a step titled "PROVIDING MACHINE LEARNABLE MODEL", providing 220 the machine learnable model. The method 200 is further shown to comprise, in a step of training 230 the machine learnable model which is titled "TRAINING THE MACHINE LEARNABLE MODEL", in a sub-step titled "GENERATING CONTENT INFORMATION-SPECIFIC FEATURE MAP", generating 240 a content information-specific feature map, in a sub-step titled "TRAINING CONTENT CLASSIFICATION PART", training 245 the content classification part on the content information-specific feature map, in a sub-step titled "GENERATING LOCATION INFORMATION-SPECIFIC FEATURE MAP", generating 250 a location information-specific feature map, and in a sub-step titled "TRAINING LOCATION CLASSIFICATION PART", training 255 the location classification part on the location information-specific feature map. The method 200 is further shown to comprise, in a sub-step titled "PROVIDING OUTLIER DETECTION PART" which is a sub-step of the providing 220 of the machine learnable model, providing 225, as part of the machine learnable model, a least one outlier detection part for detecting outliers in input data of the machine learnable model which do not fit a distribution of the training data. The method 200 is further shown to comprise, in a sub-step titled "GENERATING PSEUDO OUTLIER FEATURE MAP", this being a sub-step of the training 230, generating 260 a pseudo outlier feature map by modifying one or more previously generated feature maps which are generated for the instance of the spatial data, to mimic a presence of an actual outlier in the input data of the machine learnable model, and in a sub-step titled "TRAINING OUTLIER DETECTION PART", being a sub-step of the training 230, training 265 the outlier detection part on the pseudo outlier feature map.

The following describes the classification of objects in spatial data with the example of images. It will be appreciated, however, that the measures described below may also be applied to other types of spatial data which may not directly be considered images.

**Fig. 3** illustrates a relation between content information and location information in spatial data and the classification of objects in the spatial data, and also serves to illustrate the shortcomings of deep classifiers, e.g., of deep neural networks, when classifying objects. Namely, broadly speaking, an object class may be classifiable in spatial data on the basis of two fundamental factors: content, e.g., the presence of elements/parts composing the object, and location, e.g., the spatial placement and arrangement of these parts. Fig. 3 shows a real-life example in the form of an image 300 containing a face. The face is typically classifiably by a human observer as a face based on content information, e.g., the texture and edges representing features such as eyes, the nose, the hair, etc., and location information, e.g., the spatial arrangement of the eyes, the nose, the hair, etc.

A standard classification network may be biased towards the spatial locations of elements and thus may also classify the second image 320, showing fruits placed in the facial arrangement of the first image 300, as a face. Alternatively, a standard classification network may be biased towards the elements themselves, e.g., the content, and thus classify the third image 330 with shuffled facial elements as a face. However, for a human observer, these images do not present a challenge. Namely, while humans would, to a certain degree, recognize all three images as faces, they would recognize that only the first image 300 shows a true face and the other images show only certain facial attributes.

The machine learnable/learned model as described in this specification represents a classification framework which may be empowered to mimic a human response. Namely, the classification framework may on the one hand recognize true faces and on the other hand may also detect an outlier face and provide an explanation of its nature, e.g., by containing true facial elements but in false locations. This ability to detect and interpret outliers while performing classification may be of great importance in many applications and for example may be used for active labelling to improve network generalization or for quality-control in manufacturing industries. In particular, the described classification framework may learn the feature representation to be specifically sensitive towards the content and location factors. Besides the standard classification, this may provide additional explanation about image ambiguities in terms of content and location.

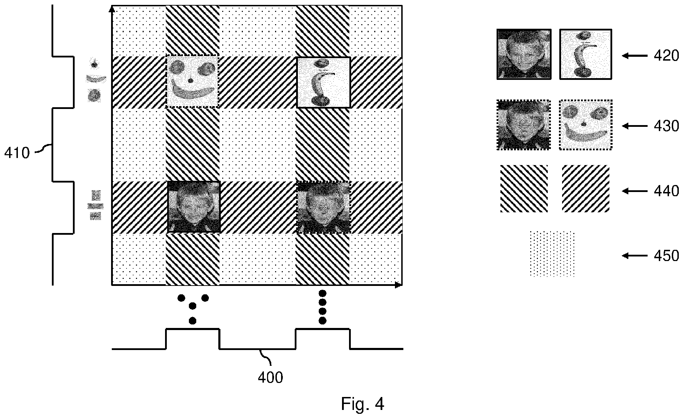

**Fig. 4** illustrates the joint space of the location (or spatial arrangement, x-axis) and content (y-axis) factor in the classification of objects in spatial data, in that the location and content jointly define two object classes, namely faces and fruits. Each point in this 2D plot resembles a possible observed sample, in this case an image, of the joint distribution of these two factors, e.g., certain content (y-axis) placed at certain spatial locations (x-axis).

In this example, the two classes (faces and fruits) require the content and the location each to fall within a select marginal distribution, with the select marginal distributions then jointly define the object class. The marginal distributions are schematically indicated at the respective axis as respective graphs, with the graph 400 defining two marginal distributions in terms of location (spatial arrangement), namely a face-like arrangement and a vertical stack arrangement, and with the graph 410 defining two marginal distributions in terms of content, namely face features (e.g., nose, ears, eyes) and fruit features (e.g., banana, apple, cherry). Throughout this specification, the samples of which both factors fall within the respective marginal distributions and which then jointly define an object class will be referred to as 'in-distribution' samples, see reference numeral 420. These inliers belong to the two possible object classes: faces in which the content information falls within the 'face feature' marginal distribution and in which the location information falls within the 'face-like arrangement' marginal distribution, and fruits in which the content information falls within the 'fruit feature' marginal distribution and in which the location information falls within the 'vertical stack arrangement' marginal distribution. All other samples may be referred to as 'out-of-distribution samples' or 'outliers', see reference numerals 430-450. The out-distribution samples as a group may be further segregated into three distinct parts:
1. The joint-out-of-distribution samples 430 for which both factors are in their marginal distributions but their association is wrong, e.g., a sample having the content of one class but the location of another class (regions with dashed borders in Fig. 4). The second image 320 of Fig. 3 is an example thereof, with the fruits placed in a facial arrangement.
2. The marginal-out-of-distribution samples 440 for which one factor is out of its marginal distribution and the other is in its marginal distribution (striped regions in Fig. 4). The fourth image 340 in Fig. 3 is an example thereof, with randomly shuffled facial elements.
3. The full-out-of-distribution samples 450 for which all factors are out of their marginal distributions (dotted regions in Fig. 4).

In general, the structure of the out-distribution space may be more complex, e.g., with more factors besides content and location, but for the sake of simplicity, the two-factor case is considered, which leads to the three types of the outliers described above.

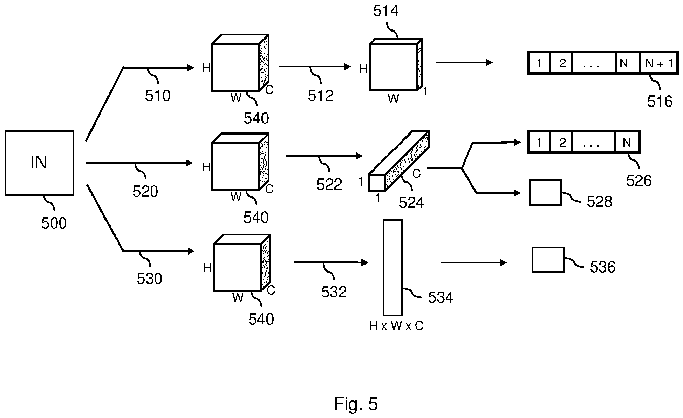

As will also be described with reference to Fig. 5, to determine into which of these out-of-distribution types a given sample falls, two separate classifiers may be provided, namely one which is sensitive to the content present in the image and insensitive (invariant) to the location/spatial arrangement of the content, and another one which is sensitive to the location/spatial arrangement and insensitive (invariant) to the content in the image. This may be achieved by purposefully removing or masking the information (content or location) to which a respective classifier should be invariant. Thereby, the classifiers may jointly distinguish between the in-distribution and marginal-out-of-distribution case. Namely, in the former case, the classification output of both classifiers may be in agreement, while in the latter case, the classification output of both classifiers may be in disagreement. As such, while the location-sensitive and content-invariant classifier may misclassify the second image 320 in Fig. 3 as a face, the content-sensitive and location-invariant classifier may misclassify the second image 320 as a fruit object (which is a misclassification, as the 'fruit' class may be defined as fruit placed a vertical stack arrangement, see also Fig. 4). Since both classifiers may be in disagreement, the second image 320 may be identified as a marginal-out-of-distribution outlier by the classification outcome of both classifiers.

However, both classifiers may not be able to distinguish the other two out-of-distribution types, namely the joint-out-of-distribution and full-out-of-distribution samples. To also distinguish the joint-out-of-distribution case, a separate outlier detector may be provided in the classification framework. To train this outlier detector, hard negative examples may be generated in the feature space by mixing information from different samples. This 'joint' outlier detector may now detect samples for which both content and location information is a valid factor for a class, but which are wrongly associated. For example, the face in the third image 330 in Fig. 3 has all the elements of a face, but of which the locations were permuted.

The classifiers described above, which may also be referred to as 'marginal-sensitive' classifiers, may also provide high-confident classifications even in the full-out-of-distribution case. To address this, a further outlier detector may be added for each of the classifiers. To predict outliers, each outlier detector may be trained in a similar way as the respective classifier, namely by deliberately removing or masking certain information from the internal representation used as input to the respective classifier and by modifying the internal representation to mimic the presence of outliers in the input of the machine learnable model. The output of the outlier detectors may be used to distinguish in the classification outcome of the marginal-sensitive classifiers between inliers and the corresponding out-of-the-marginal outliers. Notably, the machine learnable model incorporating the above described classification framework may be trained using only in-distribution samples.

In some examples, the machine learnable model may thus comprise at least two classifiers and three outlier detectors which together provide additional information about content and location factors of an image. More specifically, the output of each of the classifiers and the outlier detectors may be used to differentiate between different types of outliers and provide explanations for ambiguous cases. Such outputs may for example be logged or output to an operator, or may be used to take subsequent decisions. The following briefly summarizes the three different outlier detectors and their output when applied to the different types of input instances. It can be seen that each type of input instance may be uniquely identified by the combination of outputs of the respective outlier detectors:

| Input instance | Outlier detection for content marginal | Outlier detection for location marginal | Outlier detection for joint marginal |
|---|---|---|---|
| Inlier | No outlier | No outlier | No outlier |
| Outlier in content marginal | **Outlier** | No outlier | **Outlier** |
| Outlier in location marginal | No outlier | **Outlier** | **Outlier** |
| Outlier in joint marginal | No outlier | No outlier | **Outlier** |
| Outlier in both marginal | **Outlier** | **Outlier** | **Outlier** |

**Fig. 5** shows a schematic representation of an example of the classification framework in which an input instance 500 is mapped onto the two factor-sensitive classifiers and three outlier detectors. The respective classifiers and outliers may be considered to represent 'branches' of the framework, which may some embodiments be implemented by different heads of a deep neural network. The two different classifiers or classification branches 510, 520 may provide their output based on two different marginals (e.g., location and content), which adds interpretability to the decision making. To further enhance the interpretability, both the content and location sensitive classifiers 510, 520 may each be provided with a respective outlier detector to predict the outliers that do not align with the respective marginal distribution. The outlier detector for the location-sensitive classifier 510 (**LSC**) may detect the outliers with respect to the location marginal, and thereby detect those samples that do not fit the known spatial location distribution. Similarly, the outlier detector for the content-sensitive classifier 520 (**CSC**) may categorize unknown or incomplete content as outliers irrespective of its spatial location. Moreover, it may be desirable to detect outliers on the joint marginal distribution, and thereby detect those samples which are inliers in both marginals but of which the association between the marginals is inaccurate. To detect such outliers, a third outlier detector, which is also referred to 'outlier detector on joint marginal distribution' 530 (**ODJ**), may be provided. Overall, the framework with three outlier detectors along with two classifiers makes it possible to detect and provide interpretability whether an outlier belongs to marginal-out-distribution, joint-out-distribution or full-out-distribution. This framework is depicted in Fig. 5, with the respective components being described below.

**Content-sensitive classifier (CSC, 520):** This classifier's decisions may be based upon the content of object elements/parts independent of their spatial location. Let the dimension of the input feature map *F^{input}* 540 of the **CSC**-branch 520 be *H* × *W* × *C*, where *H, W C* are the height, width and channels of the feature map. Note that the spatial resolution *H* × *W* may capture spatial information and channels C may encode feature representations, and that such an input feature map of *H* × *W* × *C* may also be considered to represent a C-tuple of *H* × *W* × 1 feature maps. Upon removing the spatial information from the channels, the content-sensitive classifier may be directed to respond to the features encoded in different channels irrespective of their spatial location. For that purpose, the spatial information *H* × *W* may be aggregated 522 across the channels C in order to remove the spatial information and allow the classifier to make its decisions based on the feature representation encoded in spatially aggregated channels *F^{c}* 524 with size 1 × 1 × *C*, which may elsewhere also be referred to as a content information-specific feature map. Spatial aggregation of *F^{input}* at channel *k* may be formulated as: ${F}_{k}^{c} = {\sum }_{i = 1}^{H} {\sum }_{j = 1}^{W} {F}_{ijk}^{input}$.

**Outlier detection for content marginal (ODC):** Given that the **CSC** 520 may classify an input sample into one of the object classes, it may be desirable to provide an outlier detector to identify outliers of which the content lies outside of the marginal distribution. It may be desired to detect outliers which are unseen during the training while only using the inlier samples from the training data. The following explains how potential outliers may be generated and how the outlier detector may be trained in a self-supervised manner. Namely, hard negative examples of outliers may be generated by augmenting the intermediate feature maps *F^{input}* 540 before the spatial aggregation 522. Here, the samples with the entire content present may be considered as inliers, whereas the samples with absent, incomplete and/or mismatched content may be considered as outliers. Such outliers may be generated in the feature map *F^{input}* by removing a part of information or blending the content of samples from one class with the content of samples from another class. For example, the blending may be be accomplished by replacing a patch of size *h* × *w* × *C* from the feature map *F^{input}*(*class*1) with a same patch size from the feature map of a different class *F^{input}*(*not class*1)*,* where *h* < *H* and *w < W.* Information may for example be removed by setting all values in the patch to be 0. Such self-generated outliers in the feature space may be referred to as pseudo outliers *F^{pseudo}.* These set of outliers may be generated in every training iteration and the outlier detector may be trained on both the inlier and pseudo outlier feature maps. Note that the **CSC** may be trained solely on the valid inlier training data, and that the pseudo outliers may be used only to train the outlier detector (**ODC**).

**Location-sensitive classifier (LSC, 510):** This classifier's decisions may be based on the spatial locations of the object's parts/elements but not their content. Consider the input feature map *F^{input}* 540 of the **LSC** with dimensions *H* × *W* × *C*. The spatial resolution *H* × *W* may contain spatial information and channels *C* may encode feature representations. It may be desired to capture only the spatial information and thereby possibly discard the feature representations. Similar to the spatial aggregation in the **CSC** branch 520, feature aggregation 512 may be applied to the intermediate feature map *F^{input}* 540 to integrate-out content information, resulting in the feature map *F^{l}* 514 with dimensions *H* × *W* × 1. The feature aggregation at every location i,j in *F^{input}* may be formulated as: ${F}_{ij}^{l} = {\sum }_{m = 1}^{C} {F}_{ijm}^{input}$, for *i,j* ∈ *H* × *W.* This feature aggregation may weaken the content representation but does not affect the spatial information. The classifier branch with this feature aggregation as a component (branch 510 in Fig. 5) may be sensitive only to the spatial locations of object elements for decision-making irrespective of their exact content.

**Outlier detection for location marginal (ODL):** This outlier detector may categorize the samples with unknown or incomplete spatial locations of object elements as outliers, as they may not correspond to the known location marginal distribution. Similar to **ODC,** the outlier detection may be trained in a self-supervised manner. For example, pseudo outlier samples may be generated from the aggregated feature map *F^{l}* 514. As mentioned above, potential outliers are the samples with unknown or incomplete spatial arrangement. Such outlier samples may be generated from the feature map *F^{l}* either by removing a part of information or randomly shuffling locations in the feature map. It was found that the **ODL** may not need to be implemented as a separate outlier detector but that the outlier detection may be implemented as an additional class in the classification branch 510. It is hypothesized that learning spatial arrangement may be 'easier' than learning distinct feature representations, and thus that the former may be included as an additional class in the classification branch, which is shown in Fig. 5 as a classification of N+1 classes 516 compared to the other classification branch's N classes 526. Accordingly, inliers may have their class values provided as a ground truth whereas the pseudo outliers may be treated as outlier class. For example, the standard cross-entropy loss may be used to train the inliers, while the loss for pseudo outlier samples may include the standard cross entropy loss on the outlier class, while in addition the entropy of the pseudo outlier samples on the inlier classes may be increased. In a specific example, the outlier classification loss may be as follows: 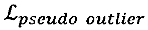 = -log(*Pₒᵤₜₗᵢₑᵣₛ*) + *λ*log(*P_{class}*). Here, *Pₒᵤₜₗᵢₑᵣₛ, P_{class}* are the outlier and inlier class probabilities. In a specific example, *λ* may be set to 0.05. Considering outliers as an additional class and computing the above loss may improve the outlier detection. This may not hold true for other outlier detectors, as initial empirical evidence appears to show.

**Outlier detection for joint marginal distribution (ODJ):** This outlier detector may treat the samples that share similar attributes to the training data as inliers and the rest as outliers. Similar to the ODC, the pseudo outliers may be generated from the intermediate feature map 540 with dimension *H* × *W* × *C.* In **ODC,** the pseudo outliers may be subject to spatial aggregation 522 and which may result in the loss of spatial information. On the other hand, **ODL** may simulate pseudo outliers from the aggregated feature map and may have no cues for the content information. Unlike these two cases, **ODJ** may be desired to be sensitive to both content and location marginals. Hence, the entire feature map 540 of dimension *H* × *W* × *C* may, after flattening 532, be used as input for outlier detection so that both content and spatial information persists. The augmenting strategy may be similar to the **ODC,** where a part of information may be removed or information blended between inter-class features. In addition to the above strategies, also any of the two locations with patch size *h* × *w* × *C* may be swapped within the same feature map. This additional example may allow the outlier detector to be sensitive to changes in any of the two marginals.

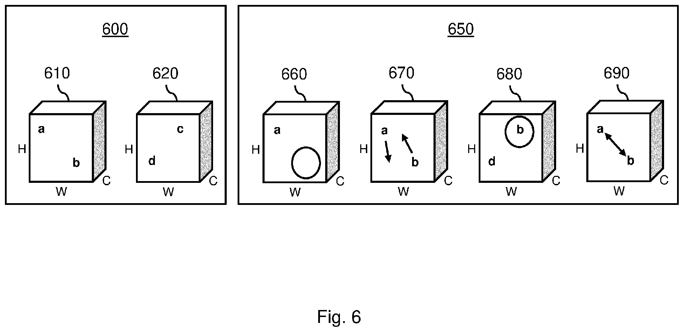

**Fig. 6** shows examples of pseudo outliers generated for the outlier detectors of the Fig. 5 example, in which the tokens a, b, c, d represent respective activations in an intermediate feature map, and wherein the pseudo outliers may be obtained by perturbing locations and/or content in four different ways. More specifically, Fig. 6 shows intermediate feature maps 600 of inliers for class A 610 and for class B 620. Class A is shown to comprise tokens a and b in the depicted spatial arrangement, while class B is shown to comprise tokens c and d in the depicted spatial arrangement. Pseudo outliers may be generated by modifying one or both intermediate feature maps 600 to create intermediate feature maps 650 of pseudo outliers. For example, an intermediate feature map 660 may be generated by removing information, being in this case the token b from the intermediate feature map 610. Another example is the intermediate feature map 670 which may be generated by randomly shuffling the location of tokens, thereby moving token a and token b to new locations. Yet another example is the intermediate feature map 680 which may be generated by mixing the content between classes, for example by replacing the token c in the intermediate feature maps 620 by the token b from the intermediate feature maps 610. Yet another example is the intermediate feature map 690 which may be generated by swapping the location of token a and token b in the intermediate feature maps 610.

With respect to the training, it is noted that the inlier examples from the training data and any generated pseudo outliers may be used to train the outlier detectors. All three outlier detectors and the two classifiers may be trained independently to each other, but may be trained in a same training session, e.g., in same or separate iterations of the training session. The following describes specific examples of training parameters and architecture/network parameters, but which are merely exemplary and entirely non-limiting.

In a specific example, both **CSC** and **ODJ** may be trained for 100 epochs starting with learning rate 0.001, with the learning rate being dropped by a factor of 0.1 after 80 epochs. It was found that **LSC** may be trained for fewer number of epochs than the other branches. In a specific example, it was sufficient to train only for 25 epochs with learning rate 0.001. In a specific example, a batch size 128 and Adam optimizer with no weight decay may be used. In a specific example, the network weights may be initialized with Xavier initialization. In a specific example, the mean square error loss and tanh activation function may be used for outlier detection in both **CSC** and **ODJ.** Here, the labels may also be flipped with a probability of 0.1 in every batch training, flipping the label of inlier samples as outliers and self-generated outlier samples as inliers to avoid network overfitting on inlier samples.

In a specific example, for **CSC,** training may be started only with the classification loss until epoch 8 while later including the loss for outlier detection. Such setting may pretrain the weights and stabilize the training for outlier detection. A classifier similar to **CSC** may be used in the **ODJ** branch to pretrain the weights until epoch 8 and later use both the classification loss and also the loss for outlier detection to stabilize rest of the training. The classifier including the outlier class in **LSC** may start training from scratch.

In a specific example, the architecture details of **LSC** may be as follows: input1c-conv16c-conv32c-conv64c-FeatureAggregation1c-conv1c-fc4. The kernel size of the convolutional layers may be [5,5,3,3] respectively. Here, input1c, conv16c, fc4 refers to input with 1 channel, convolutional layer with 16 feature maps and classifier with 4 classes (3 object classes + 1 outlier class) respectively. In a specific example, the base architecture details of **CSC** may be as follows: input1c-conv16c-conv32c-conv64c-conv16c-SpatialAggregation16c-fc512-fc128. The classification and outlier heads are follows: fc128-fc3 and fc128-fc1. Here fc3 represents classifier for 3 class objects and fc1 refers to outlier detection neuron. In a specific example, the architecture details of **ODJ** may be as follows: input1c-conv16c-conv32c-convb4c-conv4c-reshape(4 × 16 × 16)-fc512-fc128-fc1. The classification loss to stabilize the training of **ODJ** may be as follows: fc128-fc3.

In a specific example, for the generation of outlier samples in all the three outlier branches during training, a patch size of either 3 × 3 or 5 × 5 may be chosen to remove or mix information from another class or swap the locations within the feature map as discussed elsewhere in this specification. In a specific example, instead of choosing the entire patch in a random manner, the center of the patch may be selected based on the highest activation location in the feature map. The feature map of size *H* × *W* × *C* may be aggregated along the channels to obtain a feature map of size *H* × *W,* which may then be normalized between [0,1] to treat it as a probability map to pick a location with probability p. In **CSC** and **ODJ,** the aggregation of channels may be performed only to pick a location with high activations but not need to be treated as any input in the network, whereas the feature map may already be aggregated in **LSC.** During the course of training, this scheme may enable the highest activation locations to be modified that would potentially result in outliers.

Experiments show that the measures describe in this specification may allow outliers in *content marginal, location marginal* and *joint marginal distribution* to be detected with high accuracy by training the machine learnable model (substantially) only on the in-distribution samples from the training data. The framework comprising the outlier detectors along with the classifiers may provide explicit cues for interpretable decision-making on unseen outlier samples. The following table illustrates the explicit cues for interpretable decision making on a few examples. As shown in this table, it is possible to interpret the type of outlier sample from the output of outlier detectors and class decision from the classifiers. When using the machine learned model on new input data, the system and/or method may provide the final inference as output or use the final inference in its final decision making.

| Input example | **ODC** | **ODL** | **ODJ** | **CSC** | **LSC** | Final inference |
|---|---|---|---|---|---|---|
| Ex. 1 | Not outlier | Not outlier | Not outlier | Class A | Class A | In-distribution |
| Ex. 2 | Not outlier | Not outlier | **Outlier** | Class B | Class A | Joint-out-distribution |
| Ex. 3 | **Outlier** | Not outlier | **Outlier** | Class A | Class A | Outlier in content, inlier in location |

**Fig. 7** shows a system 700 for classifying objects in spatial data. The system 700 may comprise an input interface 780 for accessing trained model data 196 representing a machine learned model as may be generated by the system 100 of Fig. 1 or the method 200 of Fig. 2 or as described elsewhere. For example, as also illustrated in Fig. 7, the input interface may be constituted by a data storage interface 780 which may access the trained model data 196 from a data storage 790. In general, the input interface 780 and the data storage 790 may be of a same type as described with reference to Fig. 1 for the input interface 180 and the data storage 190. Fig. 7 further shows the data storage 792 comprising input data 722 comprising at least one instance of spatial data, with the instance of the spatial data comprising an object to be classified. For example, the input data 722 may be or may comprise sensor data obtained from one or more sensors. In a specific example, the input data 722 may represent an output of a sensor-based observation, e.g., a sensor measurement, of an environment containing an object, and the machine learned model may provide a classification of the object. An example of an environment is the road ahead of an (semi-)autonomous vehicle, an inside of warehouse, an assembly line, etc. In some embodiments, the sensor data as input data 722 may also be received directly from a sensor 20, for example via a sensor interface 720 or via another type of interface instead of being accessed from the data storage 790 via the data storage interface 780. In such embodiments, the sensor data may be received 'live', e.g., in real-time or pseudo real-time.

The system 700 may further comprise a processor subsystem 760 which may be configured to, during operation of the system 700, apply the convolutional part of the machine learned model to the input data to generate one or more feature maps, generate a content information-specific feature map by removing location information from one of the one or more feature maps, and apply the content classification part to the content information-specific feature map to obtain a content-based object classification result. The processor subsystem 760 may be further configured to generate a location information-specific feature map by removing content information from one of the one or more feature maps, and apply the location classification part to the location information-specific feature map to obtain a location-based object classification result. The processor subsystem 760 may be further configured to apply the outlier detection part to one or more previously generated feature maps which are generated for the instance of the spatial data, to obtain an outlier detection result, and to classify the object in the spatial data in accordance with the content-based object classification result, the location-based object classification result and the outlier detection result, wherein said classifying comprises classifying the input data in accordance with an object class if the content-based object classification result and the location-based object classification result both indicate the object class and if the outlier detection result does not indicate a presence of an outlier.

In general, the processor subsystem 760 may be configured to perform any of the functions as previously described with reference to Figs. 3-6 and elsewhere. In particular, the processor subsystem 760 may be configured to apply a machine learned model of a type as described with reference to the training of the machine learnable/learned model. It will be appreciated that the same considerations and implementation options apply for the processor subsystem 760 as for the processor subsystem 160 of Fig. 1. It will be further appreciated that the same considerations and implementation options may in general apply to the system 700 as for the system 100 of Fig. 1, unless otherwise noted.

Fig. 7 further shows various optional components of the system 700. For example, in some embodiments, the system 700 may comprise a sensor data interface 720 for directly accessing sensor data 722 acquired by a sensor 20 in an environment 60. The sensor 20 may, but does not need to, be part of the system 700. The sensor 20 may have any suitable form, such as an image sensor, lidar sensor, radar sensor, etc., or in general any individual or set of sensors which provide spatial data containing objects to be classified. The sensor data interface 720 may have any suitable form corresponding in type to the type of sensor, including but not limited to a low-level communication interface, an electronic bus, or a data storage interface of a type as described above for the data storage interface 780.

In some embodiments, the system 700 may comprise an actuator interface 740 for providing control data 742 to an actuator 40 in the environment 60. Such control data 742 may be generated by the processor subsystem 760 to control the actuator 40 based on the classification result, as may be generated by the machine learned model when applied to the input data 722. For example, the actuator 40 may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 8 for an (semi-)autonomous vehicle.

In other embodiments (not shown in Fig. 7), the system 700 may comprise an output interface to a rendering device, such as a display, a light source, a loudspeaker, a vibration motor, etc., which may be used to generate a sensory perceptible output signal which may be generated based on the classification result by the machine learned model. The sensory perceptible output signal may be directly indicative of the classification result by the machine learned model, but may also represent a derived sensory perceptible output signal, e.g., for use in guidance, navigation or other type of control of the physical system.

In general, each system described in this specification, including but not limited to the system 100 of Fig. 1 and the system 700 of Fig. 7, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 700 may be part of vehicle, robot or similar physical entity, and/or may be represent a control system configured to control the physical entity.

**Fig. 8** shows an example of the above, in that the system 700 is shown to be a control system of an (semi-)autonomous vehicle 80 operating in an environment 60. The autonomous vehicle 80 may be autonomous in that it may comprise an autonomous driving system or a driving assistant system, with the latter also being referred to as a semiautonomous system. The autonomous vehicle 80 may for example incorporate the system 700 to control the steering and the braking of the autonomous vehicle based on sensor data obtained from a video camera 22 integrated into the vehicle 80. For example, the system 700 may control an electric motor 42 to perform (regenerative) braking in case the autonomous vehicle 80 is expected to collide with a pedestrian. The system 700 may control the steering and/or braking to avoid collision with the pedestrian. For that purpose, the system 700 may classify objects such as pedestrians in the sensor data obtained from the video camera. If the state of the vehicle, e.g., its position relative to the pedestrian, is expected to result in a collision, the system 700 may take corresponding action.

**Fig. 9** shows a computer-implemented method 800 for classifying objects in spatial data. The method 800 may correspond to an operation of the system 700 of Fig. 7, but may also be performed using or by any other system, apparatus or device.

The method 800 is shown to comprise, in a step titled "ACCESSING MACHINE LEARNED MODEL", accessing 810 a machine learned model as described elsewhere in this specification and in a step titled "ACCESSING INPUT DATA", accessing 820 input data, the input data comprising an instance of spatial data, the instance of the spatial data comprising an object to be classified. The method 800 is further shown to comprise, in a step titled "GENERATING FEATURE MAP(S)", applying the convolutional part of the machine learned model to the input data to generate 830 one or more feature maps, and in a step titled "GENERATING CONTENT INFORMATION-SPECIFIC FEATURE", generating 840 a content information-specific feature map by removing location information from one of the one or more feature maps. The method 800 is further shown to comprise, in a step titled "GENERATING LOCATION INFORMATION-SPECIFIC FEATURE", generating 850 a location information-specific feature map by removing content information from one of the one or more feature maps, and in a step titled "GENERATING CONTENT-BASED OBJECT CLASSIFICATION RESULT", applying 860 the content classification part to the content information-specific feature map to obtain a content-based object classification result. The method 800 is further shown to comprise, in a step titled "GENERATING LOCATION-BASED OBJECT CLASSIFICATION RESULT", applying 870 the location classification part to the location information-specific feature map to obtain a location-based object classification result, and in a step titled "GENERATING OUTLIER DETECTION RESULT", applying 880 the outlier detection part to one or more previously generated feature maps which are generated for the instance of the spatial data, to obtain an outlier detection result. The method 800 is further shown to comprise, in a step titled "CLASSIFYING OBJECT IN SPATIAL DATA", classifying 890 the object in the spatial data in accordance with the content-based object classification result, the location-based object classification result and the outlier detection result, wherein said classifying comprises classifying the input data in accordance with an object class if the content-based object classification result and the location-based object classification result both indicate the object class and if the outlier detection result does not indicate a presence of an outlier.

It will be appreciated that, in general, the operations or steps of the computer-implemented methods 200 and 800 of respectively Figs. 2 and 9 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in **Fig. 10****,** instructions for the computer, e.g., executable code, may be stored on a computer-readable medium 900, e.g., in the form of a series 910 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 10 shows an optical disc 910. In an alternative embodiment of the computer-readable medium 900, the computer-readable medium may comprise model data 910 defining a machine learned model as described elsewhere in this specification.

Examples, embodiments or optional features, whether indicated as non-limiting or not, are not to be understood as limiting the invention as claimed.

In accordance with an abstract of the specification, it is noted a system and method may be provided for classifying objects in spatial data using a machine learned model, as well as a system and method for training the machine learned model. The machine learned model may comprise a content sensitive classifier, a location sensitive classifier and at least one outlier detector. Both classifiers may jointly distinguish between objects in spatial data being in-distribution or marginal-out-of-distribution. The outlier detection part may be trained on inlier examples from the training data, while the presence of actual outliers in the input data of the machine learnable model may be mimicked in the feature space of the machine learnable model during training. The combination of these parts may provide a more robust classification of objects in spatial data with respect to outliers, without having to increase the size of the training data.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (200) for training a machine learnable model for classification of objects in spatial sensor data wherein the objects are classifiable into different object classes by combining content information and location information contained in the spatial sensor data, the method comprising:
- accessing (210) training data, the training data comprising instances of spatial sensor data, the instances of the spatial sensor data comprising objects belonging to different object classes;
- providing (220) the machine learnable model, wherein the machine learnable model comprises a convolutional part comprising one or more convolutional layers for generating one or more feature maps from an instance of spatial sensor data, wherein the one or more feature maps have spatial dimensions which represent spatial dimensions of the spatial sensor data, wherein an activation in a feature map at a particular location represents an occurrence of a feature representing content at the particular location, and providing a first classification part and a second classification part in the machine learnable model;
- as part of the training (230) of the machine learnable model,
generating (240) a content information-specific feature map by removing location information from the one or more feature maps, and training (245) the first classification part on the content information-specific feature map to obtain a content classification part;
generating (250) a location information-specific feature map by removing content information from the one or more feature maps, and training (255) the second classification part on the location information-specific feature map to obtain a location classification part;
the method further comprising:
- providing (225), as part of the machine learnable model, a least one outlier detection part for being trained for detecting outliers in input data of the machine learnable model which do not fit a distribution of the training data; and
- as part of the training (230) of the machine learnable model,
generating (260) a pseudo outlier feature map by modifying one or more previously generated feature maps which are generated for the instance of the spatial sensor data, to mimic a presence of an actual outlier in the input data of the machine learnable model, wherein modifying the one or more previously generated feature maps comprises at least one of:
- removing feature information from said feature maps;
- pseudo-randomly shuffling locations of feature information in said feature maps;
- mixing feature information between feature maps of different object classes;
- swapping feature information at different locations in said feature maps, and training (265) the outlier detection part on the pseudo outlier feature map.

2. The method (200) according to claim 1, wherein the machine learnable model comprises a location-and-content outlier detection part, wherein the method comprises generating (260) the pseudo outlier feature map for the location-and-content outlier detection part by modifying feature information which is contained in the one or more previously generated feature maps and which is associated with both the location information and the content information.

3. The method (200) according to claim 1 or 2, wherein the machine learnable model comprises a location outlier detection part, wherein the method comprises generating the pseudo outlier feature map (260) for the location outlier detection part by modifying feature information which is contained in the one or more previously generated feature maps and which is associated with the location information.

4. The method (200) according to claim 3, wherein the location outlier detection part is implemented by the location classification part by providing the pseudo outlier feature map to the location classification part as part of a separate outlier object class to be learned.

5. The method (200) according to any one of claims 1 to 4, wherein the machine learnable model comprises a content outlier detection part, wherein the method comprises generating (260) the pseudo outlier feature map for the content outlier detection part by modifying feature information which is contained in the one or more previously generated feature maps and which is associated with the content information.

6. The method (200) according to any one of claims 1 to 5, wherein each one of the one or more feature maps generated by the convolutional part each has at least two spatial dimensions associated with the location information and wherein feature values of the one or more feature maps at each spatial coordinate together form a feature vector representing content information at the respective spatial coordinate, wherein:
- removing the location information from the one of the one or more feature maps comprises aggregating the one or more feature maps over the spatial dimensions to form a content information-specific feature map comprising one feature vector;
- removing the content information from the one of the one or more feature maps comprises aggregating the feature values per spatial coordinate over the one or more feature maps to form a location information-specific feature map having at least two spatial dimension and one feature value channel.

7. The method (200) according to any one of claims 1 to 6, wherein the machine learnable model is a deep neural network, wherein the convolutional part is a convolutional part of the deep neural network and wherein the content classification part and the location classification part are respective classification heads of the deep neural network.

8. A computer-implemented method (800) for classifying objects in spatial sensor data, wherein the objects are classifiable into different object classes by combining content information and location information contained in the spatial sensor data, the method comprising:
- accessing (810) a machine learned model, wherein the machine learned model is a machine learnable model trained by the method according to any one of claims 1 to 7;
- accessing (820) input data, the input data comprising an instance of spatial sensor data, the instance of the spatial sensor data comprising an object to be classified;
- applying the convolutional part of the machine learned model to the input data to generate (830) one or more feature maps, wherein the one or more feature maps have spatial dimensions which represent spatial dimensions of the spatial sensor data, wherein an activation in a feature map at a particular location represents an occurrence of a feature representing content at the particular location;
- generating (840) a content information-specific feature map by removing location information from one of the one or more feature maps, and applying (860) the content classification part to the content information-specific feature map to obtain a content-based object classification result;
- generating (850) a location information-specific feature map by removing content information from one of the one or more feature maps, and applying (870) the location classification part to the location information-specific feature map to obtain a location-based object classification result;
- applying (880) the outlier detection part to one or more previously generated feature maps which are generated for the instance of the spatial sensor data, to obtain an outlier detection result;
- classifying (890) the object in the spatial sensor data in accordance with the content-based object classification result, the location-based object classification result and the outlier detection result, wherein said classifying comprises classifying the input data in accordance with an object class if the content-based object classification result and the location-based object classification result both indicate the object class and if the outlier detection result does not indicate a presence of an outlier.

9. The method (800) according to claim 8, further comprising performing the method (200) according to any one of claims 1 to 7 before using the machine learned model to classify the objects in the spatial sensor data.

10. A computer-readable medium (900) comprising transitory or non-transitory data (910) representing a computer program, the computer program comprising instructions for causing a processor system to perform the method according to any one of claims 1 to 9.

11. A system (100) for training a machine learnable model for classification of objects in spatial sensor data, wherein the objects are classifiable into different object classes by combining content information and location information contained in the spatial sensor data, the system comprising:
- an input interface (180) for accessing training data (192), the training data comprising instances of spatial sensor data, the instances of the spatial sensor data comprising objects belonging to different object classes;
- a processor subsystem (160) configured to:
- provide the machine learnable model (194), wherein the machine learnable model comprises a convolutional part comprising one or more convolutional layers for generating one or more feature maps from an instance of spatial sensor data, wherein the one or more feature maps have spatial dimensions which represent spatial dimensions of the spatial sensor data, wherein an activation in a feature map at a particular location represents an occurrence of a feature representing content at the particular location, and providing a first classification part and a second classification part in the machine learnable model;
- as part of the training of the machine learnable model,
generate a content information-specific feature map by removing location information from the one or more feature maps, and train the first classification part on the content information-specific feature map to obtain a content classification part; generate a location information-specific feature map by removing content information from the one or more feature maps, and train the second classification part on the location information-specific feature map to obtain a location classification part;
- provide, as part of the machine learnable model, a least one outlier detection part for being trained for detecting outliers in input data of the machine learnable model which do not fit a distribution of the training data; and
- as part of the training of the machine learnable model,
generate a pseudo outlier feature map by modifying one or more previously generated feature maps which are generated for the instance of the spatial sensor data, to mimic a presence of an actual outlier in the input data of the machine learnable model, wherein modifying the one or more previously generated feature maps comprises at least one of:
- removing feature information from said feature maps;
- pseudo-randomly shuffling locations of feature information in said feature maps;
- mixing feature information between feature maps of different object classes;
- swapping feature information at different locations in said feature maps, and train the outlier detection part on the pseudo outlier feature map; and
- an output interface (180) for outputting machine learned model data (196) representing the machine learnable model after training.

12. A system (700) for classifying objects in spatial sensor data, wherein the objects are classifiable into different object classes by combining content information and location information contained in the spatial sensor data, the system comprising:
- an input interface (720, 780) for accessing input data (722), the input data comprising an instance of spatial sensor data, the instance of the spatial sensor data comprising an object to be classified;
- a processor subsystem (760) configured to:
- access a machine learned model (196), wherein the machine learned model is a machine learnable model trained by the method according to any one of claims 1 to 7;
- apply the convolutional part of the machine learned model to the input data to generate one or more feature maps, wherein the one or more feature maps have spatial dimensions which represent spatial dimensions of the spatial sensor data, wherein an activation in a feature map at a particular location represents an occurrence of a feature representing content at the particular location;
- generate a content information-specific feature map by removing location information from one of the one or more feature maps, and apply the content classification part to the content information-specific feature map to obtain a content-based object classification result;
- generate a location information-specific feature map by removing content information from one of the one or more feature maps, and apply the location classification part to the location information-specific feature map to obtain a location-based object classification result;
- apply the outlier detection part to one or more previously generated feature maps which are generated for the instance of the spatial sensor data, to obtain an outlier detection result;
- classify the object in the spatial sensor data in accordance with the content-based object classification result, the location-based object classification result and the outlier detection result, wherein said classifying comprises classifying the input data in accordance with an object class if the content-based object classification result and the location-based object classification result both indicate the object class and if the outlier detection result does not indicate a presence of an outlier.

13. The system (700) according to claim 12, wherein the input interface is a sensor interface (720) to a sensor (20), wherein the sensor is configured to acquire the spatial sensor data.

14. The system (700) according to claim 12 or 13, wherein the system is a control system configured to adjust a control parameter based on said classification of the object.

## Patentansprüche

1. Computerimplementiertes Verfahren (200) zum Trainieren eines maschinenlernbaren Modells zur Klassifizierung von Objekten in räumlichen Sensordaten, wobei die Objekte durch Kombinieren von Inhaltsinformationen und Ortsinformationen, die in den räumlichen Sensordaten enthalten sind, in unterschiedliche Objektklassen klassifizierbar sind, wobei das Verfahren Folgendes umfasst:
- Zugreifen (210) auf Trainingsdaten, wobei die Trainingsdaten Instanzen von räumlichen Sensordaten umfassen, wobei die Instanzen der räumlichen Sensordaten Objekte umfassen, die zu unterschiedlichen Objektklassen gehören;
- Bereitstellen (220) des maschinenlernbaren Modells, wobei das maschinenlernbare Modell einen Faltungsteil umfasst, der eine oder mehrere Faltungsschichten zum Erzeugen einer oder mehrerer Merkmalskarten aus einer Instanz von räumlichen Sensordaten umfasst, wobei die eine oder die mehreren Merkmalskarten räumliche Dimensionen aufweisen, die räumliche Dimensionen der räumlichen Sensordaten repräsentieren, wobei eine Aktivierung in einer Merkmalskarte an einem bestimmten Ort ein Auftreten eines Merkmals repräsentiert, das Inhalt an dem bestimmten Ort repräsentiert, und Bereitstellen eines ersten Klassifizierungsteils und eines zweiten Klassifizierungsteils in dem maschinenlernbaren Modell;
- als Teil des Trainings (230) des maschinenlernbaren Modells,
Erzeugen (240) einer inhaltsinformationsspezifischen Merkmalskarte durch Entfernen von Ortsinformationen aus der einen oder den mehreren Merkmalskarten und Trainieren (245) des ersten Klassifizierungsteils an der inhaltsinformationsspezifischen Merkmalskarte, um einen Inhaltsklassifizierungsteil zu erhalten;
Erzeugen (250) einer ortsinformationsspezifischen Merkmalskarte durch Entfernen von Inhaltsinformationen aus der einen oder den mehreren Merkmalskarten und Trainieren (255) des zweiten Klassifizierungsteils an der ortsinformationsspezifischen Merkmalskarte, um einen Ortsklassifizierungsteil zu erhalten;
wobei das Verfahren ferner Folgendes umfasst:
- Bereitstellen (225), als Teil des maschinenlernbaren Modells, mindestens eines Ausreißerdetektionsteils, der dazu trainiert ist, um Ausreißer in Eingabedaten des maschinenlernbaren Modells zu detektieren, die nicht zu einer Verteilung der Trainingsdaten passen; und
- als Teil des Trainings (230) des maschinenlernbaren Modells,
Erzeugen (260) einer Pseudo-Ausreißermerkmalskarte durch Modifizieren einer oder mehrerer zuvor erzeugter Merkmalskarten, die für die Instanz der räumlichen Sensordaten erzeugt werden, um ein Vorhandensein eines tatsächlichen Ausreißers in den Eingabedaten des maschinenlernbaren Modells nachzuahmen, wobei das Modifizieren der einen oder der mehreren zuvor erzeugten Merkmalskarten mindestens eines des Folgenden umfasst:
- Entfernen von Merkmalsinformationen aus den Merkmalskarten;
- pseudo-zufälliges Mischen von Orten von Merkmalsinformationen in den Merkmalskarten;
- Mischen von Merkmalsinformationen zwischen Merkmalskarten verschiedener Objektklassen;
- Austauschen von Merkmalsinformationen an verschiedenen Orten in den Merkmalskarten und Trainieren (265) des Ausreißerdetektionsteils an der Pseudo-Ausreißermerkmalskarte.

2. Verfahren (200) nach Anspruch 1, wobei das maschinenlernbare Modell einen Ort-und-Inhalt-Ausreißerdetektionsteil umfasst, wobei das Verfahren Erzeugen (260) der Pseudo-Ausreißermerkmalskarte für den Ort-und-Inhalt-Ausreißerdetektionsteil durch Modifizieren von Merkmalsinformationen umfasst, die in der einen oder den mehreren zuvor erzeugten Merkmalskarten enthalten sind und die sowohl mit den Ortsinformationen als auch den Inhaltsinformationen assoziiert sind.

3. Verfahren (200) nach Anspruch 1 oder 2, wobei das maschinenlernbare Modell einen Ort-Ausreißerdetektionsteil umfasst, wobei das Verfahren Erzeugen der Pseudo-Ausreißermerkmalskarte (260) für den Ort-Ausreißerdetektionsteil durch Modifizieren von Merkmalsinformationen umfasst, die in der einen oder den mehreren zuvor erzeugten Merkmalskarten enthalten sind und die mit den Ortsinformationen assoziiert sind.

4. Verfahren (200) nach Anspruch 3, wobei der Ort-Ausreißerdetektionsteil durch den Ortsklassifizierungsteil implementiert wird, indem die Pseudo-Ausreißermerkmalskarte dem Ortsklassifizierungsteil als Teil einer zu lernenden separaten Ausreißerobjektklasse bereitgestellt wird.

5. Verfahren (200) nach einem der Ansprüche 1 bis 4, wobei das maschinenlernbare Modell einen Inhalt-Ausreißerdetektionsteil umfasst, wobei das Verfahren Erzeugen (260) der Pseudo-Ausreißermerkmalskarte für den Inhalt-Ausreißerdetektionsteil durch Modifizieren von Merkmalsinformationen umfasst, die in der einen oder den mehreren zuvor erzeugten Merkmalskarten enthalten sind und die mit den Inhaltsinformationen assoziiert sind.

6. Verfahren (200) nach einem der Ansprüche 1 bis 5, wobei jede der einen oder der mehreren Merkmalskarten, die durch den Faltungsteil erzeugt werden, jeweils mindestens zwei räumliche Dimensionen aufweist, die mit den Ortsinformationen assoziiert sind, und wobei Merkmalswerte der einen oder der mehreren Merkmalskarten an jeder räumlichen Koordinate zusammen einen Merkmalsvektor bilden, der Inhaltsinformationen an der jeweiligen räumlichen Koordinate repräsentiert, wobei:
- das Entfernen der Ortsinformationen aus der einen der einen oder der mehreren Merkmalskarten das Aggregieren der einen oder der mehreren Merkmalskarten über die räumlichen Dimensionen umfasst, um eine inhaltsinformationsspezifische Merkmalskarte zu bilden, die einen Merkmalsvektor umfasst;
- das Entfernen der Inhaltsinformationen aus der einen der einen oder der mehreren Merkmalskarten das Aggregieren der Merkmalswerte pro räumlicher Koordinate über die eine oder die mehreren Merkmalskarten umfasst, um eine ortsinformationsspezifische Merkmalskarte mit mindestens zwei räumlichen Dimensionen und einem Merkmalswertkanal zu bilden.

7. Verfahren (200) nach einem der Ansprüche 1 bis 6, wobei das maschinenlernbare Modell ein tiefes neuronales Netzwerk ist, wobei der Faltungsteil ein Faltungsteil des tiefen neuronalen Netzwerks ist und wobei der Inhaltsklassifizierungsteil und der Ortsklassifizierungsteil jeweilige Klassifizierungsköpfe des tiefen neuronalen Netzwerks sind.

8. Computerimplementiertes Verfahren (800) zum Klassifizieren von Objekten in räumlichen Sensordaten, wobei die Objekte durch Kombinieren von Inhaltsinformationen und Ortsinformationen, die in den räumlichen Sensordaten enthalten sind, in unterschiedliche Objektklassen klassifizierbar sind, wobei das Verfahren Folgendes umfasst:
- Zugreifen (810) auf ein maschinengelerntes Modell, wobei das maschinengelernte Modell ein maschinenlernbares Modell ist, das durch das Verfahren nach einem der Ansprüche 1 bis 7 trainiert wird;
- Zugreifen (820) auf Eingabedaten, wobei die Eingabedaten eine Instanz von räumlichen Sensordaten umfassen, wobei die Instanz der räumlichen Sensordaten ein zu klassifizierendes Objekt umfasst;
- Anwenden des Faltungsteils des maschinengelernten Modells auf die Eingabedaten, um eine oder mehrere Merkmalskarten zu erzeugen (830), wobei die eine oder die mehreren Merkmalskarten räumliche Dimensionen aufweisen, die räumliche Dimensionen der räumlichen Sensordaten repräsentieren, wobei eine Aktivierung in einer Merkmalskarte an einem bestimmten Ort ein Auftreten eines Merkmals repräsentiert, das Inhalt an dem bestimmten Ort repräsentiert;
- Erzeugen (840) einer inhaltsinformationsspezifischen Merkmalskarte durch Entfernen von Ortsinformationen aus einer der einen oder der mehreren Merkmalskarten und Anwenden (860) des Inhaltsklassifizierungsteils an der inhaltsinformationsspezifischen Merkmalskarte, um ein inhaltsbasiertes Objektklassifizierungsergebnis zu erhalten;
- Erzeugen (850) einer ortsinformationsspezifischen Merkmalskarte durch Entfernen von Inhaltsinformationen aus einer der einen oder den mehreren Merkmalskarten und Anwenden (870) des Ortsklassifizierungsteils an der ortsinformationsspezifischen Merkmalskarte, um ein ortsbasiertes Objektklassifizierungsergebnis zu erhalten;
- Anwenden (880) des Ausreißerdetektionsteils an einer oder mehreren zuvor erzeugte Merkmalskarten, die für die Instanz der räumlichen Sensordaten erzeugt werden, um ein Ausreißerdetektionsergebnis zu erhalten;
- Klassifizieren (890) des Objekts in den räumlichen Sensordaten gemäß dem inhaltsbasierten Objektklassifizierungsergebnis, dem ortsbasierten Objektklassifizierungsergebnis und dem Ausreißerdetektionsergebnis, wobei das Klassifizieren das Klassifizieren der Eingabedaten gemäß einer Objektklasse umfasst, wenn sowohl das inhaltsbasierte Objektklassifizierungsergebnis als auch das ortsbasierte Objektklassifizierungsergebnis die Objektklasse angeben und wenn das Ausreißerdetektionsergebnis kein Vorhandensein eines Ausreißers angibt.

9. Verfahren (800) nach Anspruch 8, das ferner Durchführen des Verfahrens (200) nach einem der Ansprüche 1 bis 7 vor dem Verwenden des maschinengelernten Modells zum Klassifizieren der Objekte in den räumlichen Sensordaten umfasst.

10. Computerlesbares Medium (900), das flüchtige oder nichtflüchtige Daten (910) umfasst, die ein Computerprogramm repräsentieren, wobei das Computerprogramm Anweisungen umfasst, um zu veranlassen, dass ein Prozessorsystem das Verfahren nach einem der Ansprüche 1 bis 9 durchführt.

11. System (100) zum Trainieren eines maschinenlernbaren Modells zur Klassifizierung von Objekten in räumlichen Sensordaten, wobei die Objekte durch Kombinieren von Inhaltsinformationen und Ortsinformationen, die in den räumlichen Sensordaten enthalten sind, in unterschiedliche Objektklassen klassifizierbar sind, wobei das System Folgendes umfasst:
- eine Eingabeschnittstelle (180) zum Zugreifen auf Trainingsdaten (192), wobei die Trainingsdaten Instanzen von räumlichen Sensordaten umfassen, wobei die Instanzen der räumlichen Sensordaten Objekte umfassen, die zu unterschiedlichen Objektklassen gehören;
- ein Prozessorsubsystem (160), das ausgelegt ist zum:
- Bereitstellen des maschinenlernbaren Modells (194), wobei das maschinenlernbare Modell einen Faltungsteil umfasst, der eine oder mehrere Faltungsschichten zum Erzeugen einer oder mehrerer Merkmalskarten aus einer Instanz von räumlichen Sensordaten umfasst, wobei die eine oder die mehreren Merkmalskarten räumliche Dimensionen aufweisen, die räumliche Dimensionen der räumlichen Sensordaten repräsentieren, wobei eine Aktivierung in einer Merkmalskarte an einem bestimmten Ort ein Auftreten eines Merkmals repräsentiert, das Inhalt an dem bestimmten Ort repräsentiert, und Bereitstellen eines ersten Klassifizierungsteils und eines zweiten Klassifizierungsteils in dem maschinenlernbaren Modell;
- als Teil des Trainings des maschinenlernbaren Modells,
Erzeugen einer inhaltsinformationsspezifischen Merkmalskarte durch Entfernen von Ortsinformationen aus der einen oder den mehreren Merkmalskarten und Trainieren des ersten Klassifizierungsteils an der inhaltsinformationsspezifischen Merkmalskarte, um einen Inhaltsklassifizierungsteil zu erhalten; Erzeugen einer ortsinformationsspezifischen Merkmalskarte durch Entfernen von Inhaltsinformationen aus der einen oder den mehreren Merkmalskarten und Trainieren des zweiten Klassifizierungsteils an der ortsinformationsspezifischen Merkmalskarte, um einen Ortsklassifizierungsteil zu erhalten;
- Bereitstellen, als Teil des maschinenlernbaren Modells, mindestens eines Ausreißerdetektionsteils, der dazu trainiert ist, um Ausreißer in Eingabedaten des maschinenlernbaren Modells zu detektieren, die nicht zu einer Verteilung der Trainingsdaten passen; und
- als Teil des Trainings des maschinenlernbaren Modells,
Erzeugen einer Pseudo-Ausreißermerkmalskarte durch Modifizieren einer oder mehrerer zuvor erzeugter Merkmalskarten, die für die Instanz der räumlichen Sensordaten erzeugt werden, um ein Vorhandensein eines tatsächlichen Ausreißers in den Eingabedaten des maschinenlernbaren Modells nachzuahmen, wobei das Modifizieren der einen oder der mehreren zuvor erzeugten Merkmalskarten mindestens eines des Folgenden umfasst:
- Entfernen von Merkmalsinformationen aus den Merkmalskarten;
- pseudo-zufälliges Mischen von Orten von Merkmalsinformationen in den Merkmalskarten;
- Mischen von Merkmalsinformationen zwischen Merkmalskarten verschiedener Objektklassen;
- Austauschen von Merkmalsinformationen an verschiedenen Orten in den Merkmalskarten und Trainieren des Ausreißerdetektionsteils an der Pseudo-Ausreißermerkmalskarte; und
- eine Ausgabeschnittstelle (180) zum Ausgeben von maschinengelernten Modelldaten (196), die das maschinenlernbare Modell nach dem Training repräsentieren.

12. System (700) zum Klassifizieren von Objekten in räumlichen Sensordaten, wobei die Objekte durch Kombinieren von Inhaltsinformationen und Ortsinformationen, die in den räumlichen Sensordaten enthalten sind, in unterschiedliche Objektklassen klassifizierbar sind, wobei das System Folgendes umfasst:
- eine Eingabeschnittstelle (720, 780) zum Zugreifen auf Eingabedaten (722), wobei die Eingabedaten eine Instanz von räumlichen Sensordaten umfassen, wobei die Instanz der räumlichen Sensordaten ein zu klassifizierendes Objekt umfasst;
- ein Prozessorsubsystem (760), das ausgelegt ist zum:
- Zugreifen auf ein maschinengelerntes Modell (196), wobei das maschinengelernte Modell ein maschinenlernbares Modell ist, das durch das Verfahren nach einem der Ansprüche 1 bis 7 trainiert wird;
- Anwenden des Faltungsteils des maschinengelernten Modells auf die Eingabedaten, um eine oder mehrere Merkmalskarten zu erzeugen, wobei die eine oder die mehreren Merkmalskarten räumliche Dimensionen aufweisen, die räumliche Dimensionen der räumlichen Sensordaten repräsentieren, wobei eine Aktivierung in einer Merkmalskarte an einem bestimmten Ort ein Auftreten eines Merkmals repräsentiert, das Inhalt an dem bestimmten Ort repräsentiert;
- Erzeugen einer inhaltsinformationsspezifischen Merkmalskarte durch Entfernen von Ortsinformationen aus einer der einen oder der mehreren Merkmalskarten und Anwenden des Inhaltsklassifizierungsteils an der inhaltsinformationsspezifischen Merkmalskarte, um ein inhaltsbasiertes Objektklassifizierungsergebnis zu erhalten;
- Erzeugen einer ortsinformationsspezifischen Merkmalskarte durch Entfernen von Inhaltsinformationen aus einer der einen oder den mehreren Merkmalskarten und Anwenden des Ortsklassifizierungsteils an der ortsinformationsspezifischen Merkmalskarte, um ein ortsbasiertes Objektklassifizierungsergebnis zu erhalten;
- Anwenden des Ausreißerdetektionsteils an einer oder mehreren zuvor erzeugte Merkmalskarten, die für die Instanz der räumlichen Sensordaten erzeugt werden, um ein Ausreißerdetektionsergebnis zu erhalten;
- Klassifizieren des Objekts in den räumlichen Sensordaten gemäß dem inhaltsbasierten Objektklassifizierungsergebnis, dem ortsbasierten Objektklassifizierungsergebnis und dem Ausreißerdetektionsergebnis, wobei das Klassifizieren das Klassifizieren der Eingabedaten gemäß einer Objektklasse umfasst, wenn sowohl das inhaltsbasierte Objektklassifizierungsergebnis als auch das ortsbasierte Objektklassifizierungsergebnis die Objektklasse angeben und wenn das Ausreißerdetektionsergebnis kein Vorhandensein eines Ausreißers angibt.

13. System (700) nach Anspruch 12, wobei die Eingabeschnittstelle eine Sensorschnittstelle (720) zu einem Sensor (20) ist, wobei der Sensor dazu ausgelegt ist, die räumlichen Sensordaten zu erfassen.

14. System (700) nach Anspruch 12 oder 13, wobei das System ein Steuersystem ist, das dazu ausgelegt ist, einen Steuerparameter basierend auf der Klassifizierung des Objekts anzupassen.

## Revendications

1. Procédé, (200) mis en œuvre par ordinateur, d'entraînement d'un modèle accessible par apprentissage automatique pour la classification d'objets dans des données spatiales de capteurs, les objets pouvant être classifiés en différentes classes d'objets en combinant des informations de contenu et des informations d'emplacement contenues dans les données spatiales de capteurs, le procédé comprenant :
- l'accès (210) à des données d'apprentissage, les données d'apprentissage comprenant des instances de données spatiales de capteurs, les instances des données spatiales de capteurs comprenant des objets appartenant à des classes d'objets différentes ;
- la fourniture (220) du modèle accessible par apprentissage automatique, le modèle accessible par apprentissage automatique comprenant une partie convolutive comprenant une ou plusieurs couches de convolution pour générer une ou plusieurs cartes de caractéristiques à partir d'une instance de données spatiales de capteurs, la ou les cartes de caractéristiques ayant des dimensions spatiales qui représentent des dimensions spatiales des données spatiales de capteurs, une activation dans une carte de caractéristiques à un emplacement particulier représentant une occurrence d'une caractéristique qui représente un contenu à l'emplacement particulier, et la fourniture d'une première partie de classification et d'une seconde partie de classification dans le modèle accessible par apprentissage automatique ;
- dans le cadre de l'entraînement (230) du modèle accessible par apprentissage automatique,
la génération (240) d'une carte de caractéristiques spécifique à des informations de contenu en retirant des informations d'emplacement de la ou des cartes de caractéristiques, et l'entraînement (245) de la première partie de classification sur la carte de caractéristiques spécifique aux informations de contenu pour obtenir une partie de classification de contenu ;
la génération (250) d'une carte de caractéristiques spécifique aux informations d'emplacement en retirant des informations de contenu de la ou des cartes de caractéristiques, et l'entraînement (255) de la seconde partie de classification sur la carte de caractéristiques spécifique aux informations d'emplacement pour obtenir une partie de classification d'emplacement ;
le procédé comprenant en outre :
- la fourniture(225), dans le cadre du modèle accessible par apprentissage automatique, d'au moins une partie de détection de valeurs aberrantes destinée à être entrainée pour détecter des valeurs aberrantes dans des données d'entrée du modèle accessible par apprentissage automatique qui ne s'ajustent pas à une distribution des données d'apprentissage ; et
- dans le cadre de l'entraînement (230) du modèle accessible par apprentissage automatique,
la génération (260) d'une carte de caractéristiques pseudo-aberrantes en modifiant une ou plusieurs cartes de caractéristiques générées antérieurement, qui sont générées pour l'instance des données spatiales de capteurs, pour imiter la présence d'une valeur aberrante réelle dans les données d'entrée du modèle accessible par apprentissage automatique, la modification de la ou des cartes de caractéristiques générées antérieurement comprenant au moins l'une des actions suivantes :
- retrait d'informations de caractéristiques desdites cartes de caractéristiques ;
- mélange pseudo-aléatoire d'emplacements d'informations de caractéristiques dans lesdites cartes de caractéristiques ;
- mélange d'informations de caractéristiques entre des cartes de caractéristiques de différentes classes d'objets ;
- permutation d'informations de caractéristiques à différents emplacements desdites cartes de caractéristiques, et entraînement (265) de la partie de détection de valeurs aberrantes sur la carte de caractéristiques pseudo-aberrantes.

2. Procédé (200) selon la revendication 1, le modèle accessible par apprentissage automatique comprenant une partie de détection de valeurs aberrantes d'emplacement et de contenu, le procédé comprenant la génération (260) de la carte de caractéristiques pseudo-aberrantes pour la partie de détection de valeurs aberrantes d'emplacement et de contenu en modifiant des informations de caractéristiques qui sont contenues dans la ou les cartes de caractéristiques générées précédemment et qui sont associées à la fois aux informations d'emplacement et aux informations de contenu.

3. Procédé (200) selon la revendication 1 ou 2, le modèle accessible par apprentissage automatique comprenant une partie de détection de valeurs aberrantes d'emplacement, le procédé comprenant la génération (260) de la carte de caractéristiques pseudo-aberrantes pour la partie de détection de valeurs aberrantes d'emplacement en modifiant des informations de caractéristiques qui sont contenues dans la ou les cartes de caractéristiques générées précédemment et qui sont associées aux informations d'emplacement.

4. Procédé (200) selon la revendication 3, la partie de détection de valeurs aberrantes d'emplacement étant mise en œuvre par la partie de classification d'emplacement en fournissant la carte de caractéristiques de pseudo-valeurs aberrantes à la partie de classification d'emplacement en tant que partie d'une classe d'objets aberrantes séparée à apprendre.

5. Procédé (200) selon l'une quelconque des revendications 1 à 4, le modèle accessible par apprentissage automatique comprenant une partie de détection de valeurs aberrantes de contenu, le procédé comprenant la génération (260) de la carte de caractéristiques pseudo-aberrantes pour la partie de détection de valeurs aberrantes de contenu en modifiant des informations de caractéristiques qui sont contenues dans la ou les cartes de caractéristiques générées précédemment et qui sont associées aux informations de contenu.

6. Procédé (200) selon l'une quelconque des revendications 1 à 5, chacune de la ou des cartes de caractéristiques générées par la partie de convolution ayant chacune au moins deux dimensions spatiales associées aux informations d'emplacement, et des valeurs de caractéristiques de la ou des cartes de caractéristiques à chaque coordonnée spatiale formant ensemble un vecteur de caractéristiques représentant des informations de contenu à la coordonnée spatiale respective :
- le retrait des informations d'emplacement de la carte ou de l'une des cartes de caractéristiques comprenant l'agrégation de la ou des cartes de caractéristiques sur les dimensions spatiales pour former une carte de caractéristiques spécifique aux informations de contenu comprenant un vecteur de caractéristiques ;
- le retrait des informations de contenu de la carte ou de l'une des cartes de caractéristiques comprenant l'agrégation des valeurs de caractéristiques par coordonnée spatiale sur la ou les cartes de caractéristiques pour former une carte de caractéristiques spécifique aux informations d'emplacement ayant au moins deux dimensions spatiales et un canal de valeur de caractéristiques.

7. Procédé (200) selon l'une quelconque des revendications 1 à 6, le modèle accessible par apprentissage automatique étant un réseau de neurones profond, la partie convolutive étant une partie convolutive du réseau de neurones profond et la partie de classification de contenu et la partie de classification d'emplacement étant des têtes de classification respectives du réseau de neurones profond.

8. Procédé (800) mis en œuvre par ordinateur pour classifier des objets dans des données spatiales de capteurs, les objets pouvant être classifiés en différentes classes d'objets en combinant des informations de contenu et des informations d'emplacement contenues dans les données spatiales de capteurs, le procédé comprenant :
- l'accès (810) à un modèle issu de l'apprentissage automatique, le modèle issu de l'apprentissage automatique étant un modèle accessible par apprentissage automatique entraîné par le procédé selon l'une quelconque des revendications 1 à 7 ;
- l'accès (820) à des données d'entrée, les données d'entrée comprenant une instance de données spatiales de capteurs, l'instance des données spatiales de capteurs comprenant un objet à classifier ;
- l'application de la partie convolutive du modèle issu de l'apprentissage automatique aux données d'entrée pour générer (830) une ou plusieurs cartes de caractéristiques, la ou les cartes de caractéristiques ayant des dimensions spatiales qui représentent des dimensions spatiales des données spatiales de capteurs, une activation dans une carte de caractéristiques à un emplacement particulier représentant une occurrence d'une caractéristique qui représente un contenu à l'emplacement particulier ;
- la génération (840) d'une carte de caractéristiques spécifique aux informations de contenu en retirant des informations d'emplacement d'une des cartes de caractéristiques, et l'application (860) de la partie de classification de contenu à la carte de caractéristiques spécifique aux informations de contenu pour obtenir un résultat de classification d'objet basé sur le contenu ;
- la génération (850) d'une carte de caractéristiques spécifique aux informations d'emplacement en retirant des informations de contenu d'une des cartes de caractéristiques, et l'application (870) de la partie de classification d'emplacement à la carte de caractéristiques spécifique aux informations d'emplacement pour obtenir un résultat de classification d'objet basée sur l'emplacement ;
- l'application (880) de la partie de détection de valeurs aberrantes à une ou plusieurs cartes de caractéristiques générées précédemment, qui sont générées pour l'instance des données spatiales de capteurs, pour obtenir un résultat de détection de valeurs aberrantes ;
- la classification (890) de l'objet dans les données spatiales de capteurs selon le résultat de la classification d'objet basée sur le contenu, le résultat de la classification d'objet basée sur l'emplacement et le résultat de la détection de valeurs aberrantes, ladite classification comprenant la classification des données d'entrée selon une classe d'objets si le résultat de la classification d'objet basée sur le contenu et le résultat de la classification d'objet basée sur l'emplacement indiquent tous deux la classe d'objets et si le résultat de la détection de valeurs aberrantes n'indique pas la présence d'une valeur aberrante.

9. Procédé (800) selon la revendication 8, comprenant en outre la réalisation du procédé (200) selon l'une quelconque des revendications 1 à 7 avant d'utiliser le modèle issu de l'apprentissage automatique pour classifier les objets dans les données spatiales de capteurs.

10. Support (900) de stockage lisible par ordinateur comprenant des données transitoires ou non-transitoires (910) représentant un programme informatique, le programme informatique comprenant des instructions destinées à amener un système processeur à réaliser le procédé selon l'une quelconque des revendications 1 à 9.

11. Système (100) d'entraînement d'un modèle accessible par apprentissage automatique pour la classification d'objets dans des données spatiales de capteurs, les objets pouvant être classifiés en différentes classes d'objets en combinant des informations de contenu et des informations d'emplacement contenues dans les données spatiales de capteurs, le système comprenant :
- une interface (180) d'entrée servant à accéder à des données (192) d'apprentissage, les données d'apprentissage comprenant des instances de données spatiales de capteurs, les instances des données spatiales de capteurs comprenant des objets appartenant à des classes d'objets différentes ;
- un sous-système processeur (160) configuré pour :
- fournir le modèle (194) accessible par apprentissage automatique, le modèle accessible par apprentissage automatique comprenant une partie convolutive comprenant une ou plusieurs couches de convolution pour générer une ou plusieurs cartes de caractéristiques à partir d'une instance de données spatiales de capteurs, la ou les cartes de caractéristiques ayant des dimensions spatiales qui représentent des dimensions spatiales des données spatiales de capteurs, une activation dans une carte de caractéristiques à un emplacement particulier représentant une occurrence d'une caractéristique qui représente un contenu à l'emplacement particulier, et fournir une première partie de classification et une seconde partie de classification dans le modèle accessible par apprentissage automatique ;
- dans le cadre de l'entraînement du modèle accessible par apprentissage automatique,
générer une carte de caractéristiques spécifique aux informations de contenu en supprimant les informations d'emplacement de la ou des cartes de caractéristiques, et entraîner la première partie de classification sur la carte de caractéristiques spécifique aux informations de contenu pour obtenir une partie de classification de contenu ;
générer une carte de caractéristiques spécifique aux informations d'emplacement en supprimant les informations de contenu de la ou des cartes de caractéristiques, et entraîner la seconde partie de classification sur la carte de caractéristiques spécifique aux informations d'emplacement pour obtenir une partie de classification d'emplacement ;
- fournir, dans le cadre du modèle accessible par apprentissage automatique, d'au moins une partie de détection de valeurs aberrantes destinée à être entrainée pour détecter des valeurs aberrantes dans des données d'entrée du modèle accessible par apprentissage automatique qui ne s'ajustent pas à une distribution des données d'apprentissage ; et
- dans le cadre de l'entraînement du modèle accessible par apprentissage automatique,
générer une carte de caractéristiques pseudo-aberrantes en modifiant une ou plusieurs cartes de caractéristiques générées antérieurement, qui sont générées pour l'instance des données spatiales de capteurs, pour imiter la présence d'une valeur aberrante réelle dans les données d'entrée du modèle accessible par apprentissage automatique, la modification de la ou des cartes de caractéristiques générées antérieurement comprenant au moins l'une des actions suivantes :
- retrait d'informations de caractéristiques desdites cartes de caractéristiques ;
- mélange pseudo-aléatoire d'emplacements d'informations de caractéristiques dans lesdites cartes de caractéristiques ;
- mélange d'informations de caractéristiques entre des cartes de caractéristiques de différentes classes d'objets ;
- permuter des informations de caractéristiques à différents endroits desdites cartes de caractéristiques, et entraîner la partie de détection de valeurs aberrantes sur la carte de caractéristiques pseudo-aberrantes ; et
- une interface (180) de sortie servant à délivrer des données (196) de modèle issu de l'apprentissage automatique représentant le modèle accessible par apprentissage automatique après apprentissage.

12. Système (700) de classification d'objets dans des données spatiales de capteurs, les objets pouvant être classifiés en différentes classes d'objets en combinant des informations de contenu et des informations d'emplacement contenues dans les données spatiales de capteurs, le système comprenant :
- une interface (720, 780) d'entrée servant à accéder à des données d'entrée (722), les données d'entrée comprenant une instance de données spatiales de capteurs, l'instance des données spatiales de capteurs comprenant un objet à classifier ;
- un sous-système processeur (760) configuré pour :
- accéder à un modèle (196) issu de l'apprentissage automatique, le modèle issu de l'apprentissage automatique étant un modèle accessible par apprentissage automatique entraîné par le procédé selon l'une quelconque des revendications 1 à 7 ;
- appliquer la partie convolutive du modèle issu de l'apprentissage automatique aux données d'entrée pour générer une ou plusieurs cartes de caractéristiques, la ou les cartes de caractéristiques ayant des dimensions spatiales qui représentent des dimensions spatiales des données spatiales de capteurs, une activation dans une carte de caractéristiques à un emplacement particulier représentant une occurrence d'une caractéristique qui représente un contenu à l'emplacement particulier ;
- générer une carte de caractéristiques spécifique aux informations de contenu en enlevant des informations d'emplacement d'une ou plusieurs cartes de caractéristiques, et appliquer la partie de classification de contenu à la carte de caractéristiques spécifique aux informations de contenu pour obtenir un résultat de classification d'objet basé sur le contenu ;
- générer une carte de caractéristiques spécifique aux informations d'emplacement en supprimant des informations de contenu d'une ou plusieurs cartes de caractéristiques, et appliquer la partie de classification d'emplacement à la carte de caractéristiques spécifique aux informations d'emplacement pour obtenir un résultat de classification d'objet basé sur la localisation ;
- appliquer la partie de détection de valeurs aberrantes à une ou plusieurs cartes de caractéristiques générées précédemment, qui sont générées pour l'instance des données spatiales de capteurs, pour obtenir un résultat de détection de valeurs aberrantes ;
- classifier l'objet dans les données spatiales de capteurs selon le résultat de la classification d'objet basée sur le contenu, le résultat de la classification d'objet basée sur l'emplacement et le résultat de la détection de valeurs aberrantes, ladite classification comprenant la classification des données d'entrée selon une classe d'objets si le résultat de la classification d'objet basée sur le contenu et le résultat de la classification d'objet basée sur l'emplacement indiquent tous deux la classe d'objets et si le résultat de la détection de valeurs aberrantes n'indique pas la présence d'une valeur aberrante.

13. Système (700) selon la revendication 12, l'interface d'entrée étant une interface (720) de capteur vers un capteur (20), le capteur étant configuré pour acquérir les données spatiales de capteurs.

14. Système (700) selon la revendication 12 ou 13, le système étant un système de commande configuré pour ajuster un paramètre de commande sur la base de ladite classification de l'objet.
